# EUROPEAN PATENT SPECIFICATION

(11) **EP 3 749 060 B1**
(45) Date of publication and mention of the grant of the patent: **01.05.2024**
(21) Application number: 19178409.9
(22) Date of filing: 05.06.2019
(51) Int. Cl.: H05B 47/10, H05B 47/105, H05B 47/175

(54) **SELF-CONFIGURING LIGHTING CONTROL**
SELBSTKONFIGURIERENDE BELEUCHTUNGSSTEUERUNG
COMMANDE D'ÉCLAIRAGE À CONFIGURATION AUTOMATIQUE

(43) Date of publication of application: 09.12.2020
(73) Proprietor: Helvar Oy Ab, 02150 Espoo (FI)
(72) Inventor: JUSLÉN, Henri, 02150 Espoo (FI); VESTERINEN, Matti, 02150 Espoo (FI)
(74) Representative: Berggren Oy

(56) References cited:
- EP-A1- 2 728 972
- EP-A1- 2 919 562
- EP-A1- 3 171 674
- EP-B1- 3 171 674
- WO-A1-2015/168127
- WO-A1-2018/091315
- KR-A- 20180 036 039
- US-A1- 2014 139 116

## Description

### TECHNICAL FIELD

The present invention relates to self-adaptation of a lighting control device of a luminaire unit according to the preamble portion of the independent claims.

### BACKGROUND

In many scenarios, a luminaire is controlled at least partially based on presence of one or more persons in the space illuminated by the luminaire such that the lights are switched (and kept) on while presence of one or more persons in the space is detected and switched (and kept) off while no persons are detected in the space. In a typical solution in this regard, a control entity receives respective sensor signals from one or more passive infrared (PIR) sensors, determines occupancy or non-occupancy accordingly, and switches/keeps the lights on (at a normal light output level) in response to occupancy and switches/keeps the lights off (or at another low light output level) in response to non-occupancy.

Modern lighting control typically may further employ sensors of other type as further basis for the lighting control. As an example in this regard, one or more light sensors may be arranged in the space illuminated by the luminaires of the lighting system and the control entity may set or adjust the lighting level at least partially based on observed light level in the space indicated in the respective sensor signals obtained from the one or more light sensors.

Sensor signals such as ones conveying the occupancy information and/or the light level information provide valuable control information that, on one hand, enables adjusting the light output of the luminaire such that sufficient light level is provided in the space in view of current occupancy of the space, while on the other hand enables energy conservation via reducing the light output of the luminaire when no occupancy in the space is detected and/or when the light level is sufficient even without substantial light output from the luminaire.

A traditional solution for lighting control that at least partially relies on the sensor information involves usage of a control entity provided with preprogrammed control logic or control algorithm that in the course of its operation reacts e.g. to respective sensor signals from a presence sensor and/or a light sensor in a predetermined manner, which is typically defined e.g. via manual configuration carried out upon installation of the control entity and the luminaire. This enables a control entity to adjust the light output of the luminaire it serves to control such that expected requirements and/or characteristics for lighting in the space illuminated by the luminaire are accounted for to some extent, while quite naturally such preprogrammed control logic is unable to account for actually encountered characteristics of the space in the course of operation of the luminaire. Moreover, in many installations the overall lighting arrangement may involve a high number of luminaires that each involve a respective control entity that serves to control respective luminaire. Hence, the number of luminaires and/or the physical locations in which the luminaires and their control entities are installed may make their manual configuration inconvenient or even (practically) impossible, thereby increasing the risk of misconfiguration and, consequently, compromised lighting performance e.g. in terms of insufficient light level and/or excessive energy consumption.

In a more advanced solution, the control entity of a luminaire is able to automatically or autonomously adapt its preprogrammed control logic based on information obtained from its operating environment e.g. via a wireless communication link and/or a wireless communication network. Such information may be referred as status information and it may involve, for example, sensor information captured by and received from another luminaire of the lighting arrangement and/or operational information pertaining to actions (e.g. switching lights on or off) carried out by another luminaire of the lighting arrangement. Hence, a first luminaire of the lighting arrangement may, in the course of its operation, learn patterns or sequences in the status information that typically precede the first luminaire taking a certain lighting control action (e.g. switching the lights on or off in response to a respective change in the sensor signal received from a local presence sensor signal) and, consequently, the first luminaire may adapt its preprogrammed control logic into one that (also) responds to detecting such pattern or sequence by taking the certain action or initiating a suitable preparatory action, thereby enabling the certain action already before the local presence sensor has detected occupancy. Examples of such a self-adjustment operation of a luminaire are disclosed in the European patent publications no. 2919562 and no. 3171674.

As a concrete example in this regard, we may consider a first luminaire and a second luminaire installed in proximity of each other e.g. in a corridor, in a room, an open office, etc. In such a setting, the control entity of the first luminaire may learn that reception of information indicating that the presence sensor of the second luminaire has detected occupancy after a period of non-occupancy (or indicating that the second luminaire has switched the light on) is frequently followed by the presence sensor of the first luminaire changing its state from non-occupancy to occupancy and, consequently, the first luminaire switching the light on. After having learned such a chain of events, the first luminaire may adapt its operation such that it switches the light on already in response to receiving an indication of the second luminaire having switched the light on, thereby (possibly) switching the light on already before the presence sensor of the first luminaire has detected occupancy.

While self-adaptation of the above-described kind enables a well-working approach for a luminaire to autonomously adjust its operation according to characteristics of its operating environment and, in particular, changes thereof independently of any central control (or lack thereof), continuous development lighting solutions results in increased versatility of lighting control options and, consequently, even more sophisticated autonomous or partially autonomous self-adjustment techniques for light control are considered advantageous.

In related art, EP 2728972 A1 discloses an approach for controlling operation of a first light source of a first color and a second light source of a second color, the approach comprising receiving an input control signal having a user-controllable duration, switching, in response to a single input control signal having the overall duration not exceeding a first predetermined threshold, the first and second light sources on or off, and changing characteristics of light provided by the first and second light sources in response to the duration of an input control signal exceeding a second predetermined threshold that is no smaller than the first predetermined threshold, the change in characteristics being dependent on duration of the input control signal and the change comprising adjustment of the ratio between the light intensities of the first light source and the second light source.

Further in related art, US 2014/139116 A1 discloses an approach that involves a number of luminaires that are communicably coupled and networked. Some or all of the luminaires may be equipped with a number of sensors including motion sensors. Upon detecting motion of an object in the vicinity of a luminaire, the luminaire can increase the luminous output of the lighting subsystem in the luminaire and communicate a targeted or broadcast output signal to some or all of the remaining luminaires in the network. The output signal may variously contain data indicative of one or more parameters related to motion of the object (direction of travel, velocity, etc.) or one or more parameters related to the increased luminous output of the luminaire. Responsive to the receipt of an output signal generated by another luminaire, the luminaire may autonomously adjust the luminous output of the lighting subsystems responsive to an event detected by the other luminaire.

Further in related art, EP 3171674 A1 discloses a control device of a luminaire that comprises control means for controlling operation of the luminaire, which assumes a certain target lighting level as a response to a triggering local input signal. Through communication means the device is configured to receive indication messages from the other devices. Adaptation means adjusting the operation of the control means in accordance with received indication messages. A relationship strength is determined, pertinent to a particular other device and indicative of regularity at which triggering local input signals have been observed after first receiving an indication message from said other device. The control means are reprogrammed to make the luminaire assume a preparatory lighting level as a response to receiving an indication message from said other device, the preparatory lighting level being dependent on the determined relationship strength.

Further in related art, WO 2018/091315 A1 discloses systems, methods, and apparatuses for controlling lights in an area of a city based on demographic data and/or mobility pattern data. Using the demographic data and/or the mobility pattern data, the lights can be arranged to attract people to the area where the lights are located. The mobility pattern data can be used to identify when people are typically moving towards the area, in order that the lights can be prepared to attract people in advance of their arrival. Furthermore, an output of the lights can be measured to measure certain characteristics about the lights so that the lights can be adjusted to better appeal to the demographic of people in the area.

Further in related art, WO 2015/168127 A1 discloses an apparatus for controlling environmental conditions using a fan and a light in connection with a building having a space including a partition, such as a wall. The apparatus may include a control adapted for being mounted to the partition and for coordinating the control of the fan and the light based on a sensed condition, such as temperature or occupancy. Groups of like devices for controlling environmental conditions may be similarly controlled, such as using control. Control may also provide an indication of an operational state of the device(s) controlled by it, or provide for control based on a preference of one or more people upon detecting their presence.

### SUMMARY

It is an object of the present invention to provide a technique that facilitates a control device serving to control light output from light sources arranged for illumination of at least two different characteristics to automatically and autonomously adapting its preprogrammed operation in response to information obtained from its operating environment.

According to the invention, a lighting unit according to claim 1 is provided.

According to the invention, a method according to claim 12 is provided.

According to the invention, a computer program according to claim 13 is provided.

The computer program according to the invention may be embodied on a volatile or a non-volatile computer-readable record medium, for example as a computer program product comprising at least one computer readable non-transitory medium having the program code stored thereon, which, when executed by one or more computing apparatuses, causes the one or more computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting system according to an example;
Figure 1B illustrates a block diagram of some components of a lighting system according to an example;
Figure 2 illustrates a block diagram of some logical components of a lighting unit according to an example;
Figure 3A illustrates a block diagram of some components of a lighting unit according to an example;
Figure 3B illustrates a block diagram of some components of a lighting unit according to an example;
Figure 3C illustrates a block diagram of some components of a lighting unit according to an example;
Figure 4 illustrates a method according to an example;
Figure 5 illustrates a block diagram of some logical components of a lighting unit according to an example;
Figure 6 illustrates a method according to an example; and
Figure 7 illustrates a block diagram of some elements of an apparatus according to an example.

### DESCRIPTION OF SOME EMBODIMENTS

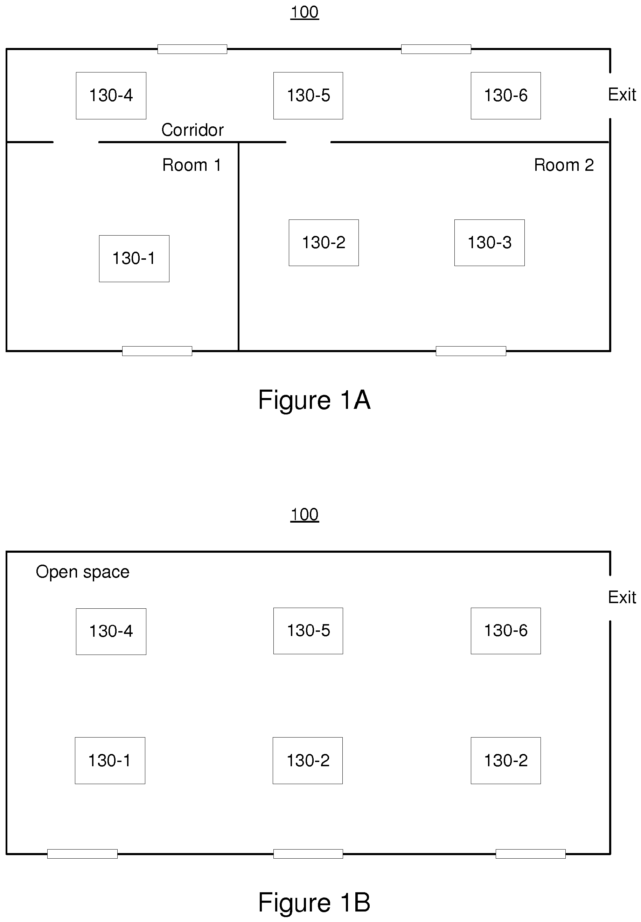

Figures 1A and 1B illustrate respective block diagrams that represent a lighting arrangement 100 for illuminating an exemplifying space. Although referred to herein as the lighting arrangement, the arrangement of Figures 1A and 1B may be alternatively referred to a lighting system, a lighting network, etc. The lighting arrangement 100 is illustrated with respective lighting units 130-1, 130-2, 130-3, 130-4, 130-5 and 130-6 that are communicatively coupled to each other via a wireless communication network or via respective wireless links. The lighting units 130-1, 130-2, 130-3, 130-4, 130-5, 130-6 represent a plurality of (i.e. two or more) lighting units 130, where an individual lighting unit may be referred to via a reference number 130-j.

In general, the lighting units 130 may be arranged, for example, for illuminating respective portions or areas of an indoor or outdoor space or arranged for illuminating respective one or more (indoor or outdoor) spaces that are adjacent or otherwise close to each other. As a few non-limiting examples, the illuminated space may comprise e.g. an office room, an open office space, a meeting room, a classroom, an auditorium, a retail store, a warehouse, a factory or other industrial establishment, a parking garage, a parking lot, a sports venue, etc.

Figure 1A illustrates a non-limiting example where the lighting units 130 of the lighting arrangement 100 are arranged for illumination of three adjacent indoor spaces according to a non-limiting example: the bold lines of Figure 1A illustrate an exemplifying floor plan in a building that involves two rooms (labeled as "Room 1" and "Room 2") and a corridor linking the rooms to an exit (labeled as "Exit"). Moreover, the white rectangles superimposed on the bold lines indicate positions of windows. The lighting system comprises the lighting units 130-1 to 130-6 with the lighting unit 130-1 arranged to illuminate the Room 1, the lighting units 130-2 and 130-3 arranged to illuminate the Room 2, and the lighting units 130-4, 130-5 and 130-6 arranged to illuminate respective areas of the corridor. Figure 1B illustrates another non-limiting example, where the lighting units 130 of the lighting arrangement 100 are arranged for illumination respective portions of a single space (labelled as "Open space)

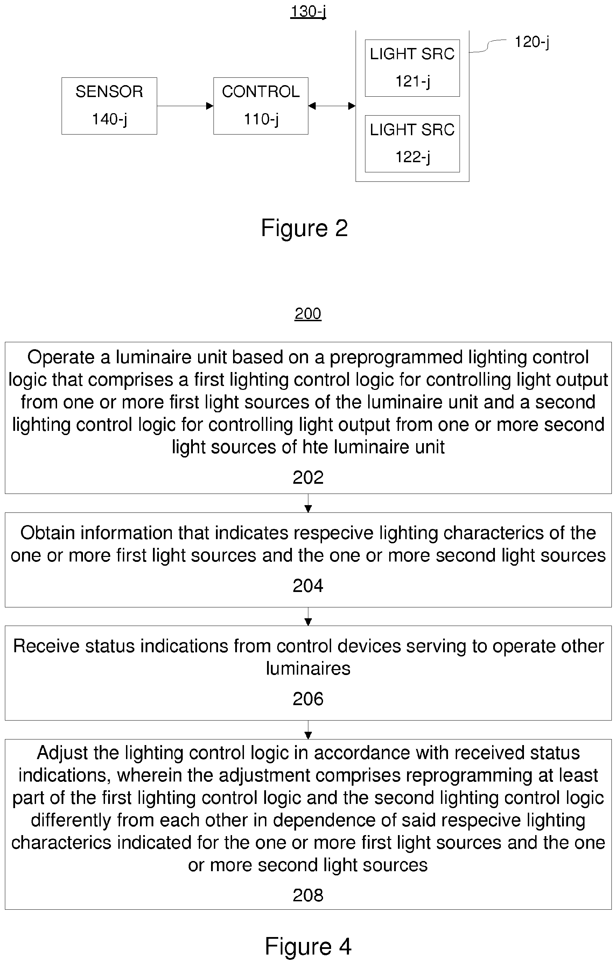

Figure 2 illustrates a block diagram of some logical components of a lighting unit 130-j, which comprises a lighting control device 110-j, a luminaire unit 120-j and a sensor assembly 140-j. The lighting control device 110-j comprises a lighting control portion for controlling the light output from the luminaire unit 120-j, an adaptation portion for adjusting operation of the lighting control portion and a communication portion for wireless communication with respective control devices 110 of other lighting units 130-j, the communication portion hence enabling the communicative coupling between the lighting unit 130-j and other lighting units 130 of the lighting arrangement 100 via a wireless communication network and/or via respective wireless links. The lighting control device 110-j is arranged to control light output of the luminaire unit 120-j based at least in part on information received from the sensor assembly 140-j and/or on information received from other lighting units 130 via the communication portion.

Each of the luminaire units 120-j comprises respective one or more first light sources 121-j and one or more second light sources 122-j, where the one or more first light sources 121-j comprise respective light sources arranged to provide lighting at first lighting characteristics and the one or more second light sources 122-j comprise respective light sources arranged to provide lighting at second lighting characteristics that are different from the first lighting characteristics at least in one aspect. The one or more first light sources 121-j may be arranged to provide specific lighting whereas the one or more second light sources 122-j may be arranged to provide general lighting, or vice versa, where the specific lighting comprises direct lighting and the general lighting comprises indirect lighting.

The lighting control device 110-j, e.g. the lighting control portion therein, is preprogrammed (or otherwise provided) with a lighting control logic that defines the manner of controlling the light output from the luminaire unit 120-j. In this regard, the lighting control logic comprises, at least conceptually, a first lighting control logic for controlling light output from the one or more first light sources 121-j and a second lighting control logic for controlling light output from the one or more second light sources 122-j. Hence, the light output control provided by the lighting control device 110-j substantially follows from the lighting control portion therein implementing the lighting control logic defined therefor. However, for brevity and clarity of the description, in the following lighting control actions arising from implementation of the lighting control logic are simply described as operations carried out by the lighting control device 110-j.

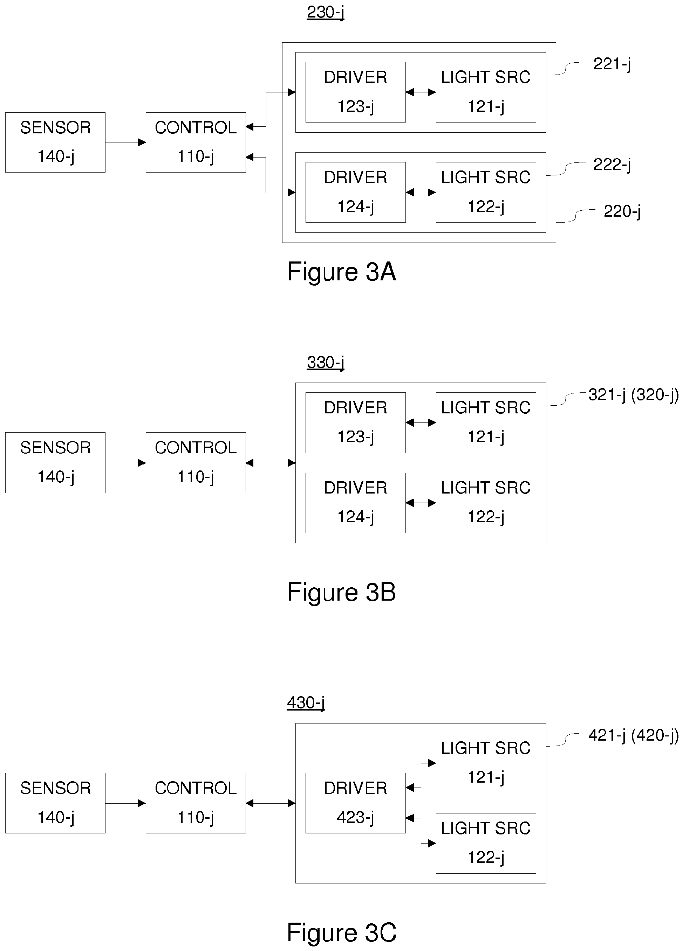

The one or more first light sources 121-j and the one or more second light sources 121-j may be arranged in one or more luminaires that together provide the luminaire unit 120-j. In other words, the luminaire unit 120-j may comprise respective one or more luminaires arranged to host the one or more first light sources 121-j and the one or more second light sources 121-j. Non-limiting examples in this regard are provided in Figures 3A, 3B and 3C.

Figure 3A illustrates a block diagram of some components of a lighting unit 230-j according to a non-limiting example. The lighting unit 230-j may be applied as the lighting unit 130-j. The lighting unit 230-j comprises a luminaire unit 220-j that includes a first luminaire 221-j and a second luminaire 222-j, where the first luminaire 221-j comprises the one or more first light sources 121-j and a first driver device 223-j arranged to drive the one or more first light sources 121-j and where the second luminaire 222-j comprises the one or more second light sources 122-j and a second driver device 224-j arranged to drive the one or more second light sources 122-j. Hence, in the lighting unit 230-j the lighting control device 110-j is arranged to control light output of the one or more first light sources 121-j via the first driver device 223-j and to control the light output of the one or more second light sources via the second driver device 224-j. In a variation of the example of Figure 3A, the one or more first light sources 121-j may be arranged in two or more first luminaires 221-j driven by a respective first driver device 223-j and/or the one or more second light sources 122-j may be arranged in two or more second luminaires 222-j driven by a respective second driver device 224-j. In such a scenario, the lighting control device 110-j operates each of the two or more first luminaires 221-j in accordance with the first lighting control logic and/or operates each of the two or more second luminaires 222-j in accordance with the second lighting control logic.

Figure 3B illustrates a block diagram of some components of a lighting unit 330-j according to another non-limiting example. The lighting unit 330-j may be applied as the lighting unit 130-j. The lighting unit 330-j comprises a single luminaire 321-j that constitutes a luminaire unit 320-j and comprises the one or more first light sources 121-j and the one or more second light sources 122-j as well as the first driver device 223-j that is arranged to drive the one or more first light sources 121-j and the second driver device 224-j arranged to drive the one or more second light sources 122-j. Hence, also in the lighting unit 330-j the lighting control device 110-j is arranged to control light output of the one or more first light sources 121-j via the first driver device 223-j and to control the light output of the one or more second light sources via the second driver device 223-j.

Figure 3C illustrates a block diagram of some components of a lighting unit 430-j according to another non-limiting example. The lighting unit 430-j may be applied as the lighting unit 130-j. The lighting unit 430-j comprises a single luminaire 421-j that constitutes a luminaire unit 420-j and comprises the one or more first light sources 121-j and the one or more second light sources 122-j together with a multi-channel driver device 423-j that comprises a first driver portion arranged to drive the one or more first light sources 121-j and a second driver portion arranged to drive the one or more second light sources 122-j. Hence, in the lighting unit 430-j the lighting control device 110-j is arranged to control light output of the one or more first light sources 121-j and that of the one or more second light sources 122-j via different channels of the multi-channel driver device 423-j.

In the examples illustrated by respective block diagrams of Figures 3A, 3B and 3C, the lighting control device 110-j is communicatively coupled to the respective driver device 123-j, 124-j, 423-j to enable control over the light output from the luminaire unit hosting the one or more first light sources 121-j and the one or more second light sources 122-j. The communicative coupling may be provided via a wireless or wired communication network or communication link. As a non-limiting example in this regard, the communicative coupling between the lighting control device 110-j and the driver device 123-j, 124-j, 423-j may be a wired coupling and it may be provided according to the Digital Addressable Lighting Interface (DALI) specified in technical standards IEC 62386 and IEC 60929 (where IEC stands for the International Electrical Commission).

Even though depicted and described as a (logical) element separate from the luminaire unit 120-j, the lighting control device 110-j may be arranged in one of the luminaires of the luminaire unit 120-j: for example in the luminaire unit 230-j the lighting control device 110-j may integrated into one of the first and second luminaires 221-j, 222-j (and communicatively coupled to the other one via a wireless or wired communication network or communication link), whereas in the luminaire units 330-j, 430-j the lighting control device 110-j may be integrated to the respective one of the luminaires 321-j, 421-j.

As described in the foregoing, the lighting unit 130-j comprises the sensor assembly 140-j, which is comprised in or coupled to the lighting control device 110-j. The sensor assembly 140-j comprises one or more sensor devices for observing respective characteristics in (a portion of) a space illuminated by the luminaire unit 120-j. In an example, the one or more sensor devices are arranged for observing (a portion of) the space illuminated by predefined ones of the one or more first light sources 121-j and the one or more second light sources 122-j, e.g. the ones arranged for the specific (e.g. direct) lighting. Even though depicted in the examples of Figures 2, 3A, 3B and 3C as a single (logical) entity, the sensor assembly 140-j may comprise one or more sensor devices that are physically separate from each other. The sensor devices may be provided in one or more sensor entities that are physically separate from other components of the lighting unit 130-j and/or the sensor devices may be arranged in (or collocated with) one of the other components of the lighting unit 130-j.

As an example, the sensor assembly 140-j may comprise e.g. at least one occupancy sensor for observing occupancy (or non-occupancy) of the space and/or at least one light sensor for observing ambient light level in the space. Each of the sensor devices provided in the sensor assembly 140-j may be arranged to provide a respective sensor signal (to the control device 110) that is descriptive of the current status of the environmental characteristic the respective sensor serves to observe: for example an occupancy sensor may provide a respective occupancy sensor signal that is descriptive of or otherwise enables deriving the current occupancy status (occupancy or non-occupancy) in (the portion of) the space illuminated by the luminaire unit 120-j, whereas a light sensor may provide a respective light sensor signal that is descriptive of or otherwise enables deriving the current ambient light level in (the portion of) the space illuminated by the luminaire unit 120-j. In a non-limiting example, each of the at least one occupancy sensor is provided as a respective motion sensor, such as a passive infrared (PIR) sensor. In this regard, for practical purposes a sensor signal from a motion sensor indicating motion (or lack thereof) directly translates into indication of occupancy (or non-occupancy).

In a non-limiting example, the one or more first light sources 121-j comprise respective light emitting diodes (LEDs) and the first driver device 123-j comprises a respective LED driver device, whereas in another non-limiting example the one or more first light sources 121-j comprise respective fluorescent lamps and the first driver device 123-j comprises a respective electronic ballast. Similar considerations pertain to the one or more second light sources 122-j and the second driver device 124-j as well as to the one or more first and second light sources 121-j, 122-j driven by the multi-channel driver device 423-j, *mutatis mutandis.*

After installation of the luminaire unit 120-j in its usage environment, the lighting control device 110-j may or may not have the knowledge of the assignment of the first and second lighting characteristics to the one or more first light sources 121-j and to the one or more second light sources 122-j. As an example this regard, the lighting control device 110-j may have the knowledge that either the one or more first light sources 121-j or the one or more second light sources 122-j are the ones arranged for providing the specific lighting and the other ones are arranged for providing the general lighting, while the lighting control device 110-j may or may not have a priori knowledge regarding whether it is the one or more first light sources 121-j or the one or more second light sources 122-j that are arranged for the specific lighting (while the other ones are arranged for the general lighting).

In case the lighting control device 110-j does not initially have the knowledge regarding the first and second lighting characteristics and/or their assignment to the one or more first light sources 121-j and the one or more second light sources 122-j, it may obtain this information after its installation in its usage environment. In an example, such indication may be received e.g. via a user interface of the lighting control device 110-j or in a specific control message received via the communication portion. In another example, the lighting control device 110-j may be arranged to send a configuration query to a luminaire unit 120-j, e.g. to the driver devices 123-j, 124-j of the luminaire unit 220-j, 320-j or to the multi-channel driver device 423-j of the luminaire unit 420-j, and receive respective configuration information from the luminaire unit 120-j. The query may be carried out, for example, according to a mechanism specified in the DALI standard. The configuration information may include e.g. respective indications of the maximum output power of the respective driver device 123-j, 124-j or respective indications of the maximum output powers in the channels of multi-channel the driver device 423-j. Consequently, the control device 110-j may derive the knowledge of the assignment of the first and second lighting characteristics to the one or more first light sources 121-j and to the one or more second light sources 122-j based on the configuration information received from the luminaire unit 120-j.

In a further example, the lighting control device 110-j (e.g. the adaptation portion therein) may be arranged to carry out a lighting type detection procedure described via an example later in this text in order to obtain information that indicates the first and second lighting characteristics. Nevertheless, in the following examples various aspects of the lighting unit 130-j are described via references to a non-limiting example where the one or more first light sources 121-j are arranged for the specific (i.e. direct) lighting and the one or more second light sources 122-j are arranged for the general (i.e. indirect) lighting. This is, however, a non-limiting choice made for editorial simplicity and in other examples the one or more first light sources 121-j may be arranged for the general lighting and the one or more second light sources 122-j may be arranged for the specific lighting.

Along the lines described in the foregoing, the lighting control device 110-j controls the light output of the lighting unit 130-j based at least in part on the sensor signals received from sensor device(s) of the sensor assembly 140-j. In this regard, the lighting control device 110-j may be arranged to control the light output from the lighting unit 130-j based on an occupancy sensor signal from an occupancy sensor. In general, the lighting control device 110-j may be arranged to take a predefined lighting control action (e.g. switch the light on or off, adjust the light intensity, ...) in response to a respective predefined local triggering condition that may directly or indirectly pertain to the occupancy sensor signal (e.g. a change in occupancy status). The triggering condition is designated as 'local' due its occurrence locally, based on the sensor signal received from a sensor device of the sensor assembly 140-j. Non-limiting examples in this regard include the following.
- The lighting control device 110-j may be arranged to, in response to the occupancy sensor signal indicating occupancy after a period of non-occupancy, switch on the light output from the one or more first light sources 121-j at a first target light intensity I_{tgt,1}.
- The lighting control device 110-j may be further arranged to, in response to occupancy sensor signal indicating non-occupancy after a period of occupancy, start a first switch-off timer to measure a first switch-off period T_{off,1}, to start a first dim-down timer to measure a first dim-down period T_{dim,1} (where T_{off,1} > T_{dim,1}), to adjust the light output from the one or more first light sources 121-j to a first intermediate light intensity I_{int,1} (where I_{int,1} < I_{tgt,1}) in response to the first dim-down timer elapsing without the occupancy sensor signal indicating occupancy and to adjust the light output from the one or more first light sources 121-j to a first stand-by light intensity I_{off,1} in response to the first switch-off timer elapsing without the occupancy sensor signal indicating occupancy.

- The lighting control device 110-j may be further arranged to, in response to the occupancy sensor signal indicating occupancy after a period of non-occupancy, switch on the light output from the one or more second light sources 122-j at a second target light intensity I_{tgt,2}.
- The lighting control device 110-j may be further arranged to, in response to occupancy sensor signal indicating non-occupancy after a period of occupancy, start a second switch-off timer to measure a second switch-off period T_{off,2}, to start a second dim-down timer to measure a second dim-down period T_{dim,2} (where T_{off,2} > T_{dim,2}), to adjust the light output from the one or more second light sources 122-j to a second intermediate light intensity I_{int,2} (where I_{int,2} < I_{tgt,2}) in response to the second dim-down timer elapsing without the occupancy sensor signal indicating occupancy and to adjust the light output from the one or more second light sources 122-j to a second stand-by light intensity I_{off,2} in response to the second switch-off timer elapsing without the occupancy sensor signal indicating occupancy.

The above-described aspects of the lighting control logic that involve taking a respective predefined lighting control action in response to a respective predefined local triggering condition that directly or indirectly pertains to the occupancy sensor signals may constitute (part of the) preprogrammed operation the lighting control device 110-j, which may be defined by configuring the lighting control device 110-j to operate accordingly upon manufacturing the lighting control device 110-j. The lighting control logic may be provided e.g. as program code stored in a memory in the lighting control device 110-j that will be executed by a processor in the lighting control device 110-j in the course of its operation. Further in this regard, also the first switch-off period T_{off,1}, the first dim-down period T_{dim,1}, the second switch-off period T_{off,2}, and the second dim-down period T_{dim,2}, the first target light intensity I_{tgt,1}, the first intermediate light intensity I_{dim,1}, the first stand-by light intensity I_{off,1}, the second target light intensity I_{tgt,2}, the second intermediate light intensity I_{dim,2} and the second stand-by light intensity I_{off,2} may be initially set to respective preprogrammed default values, which are stored in the memory provided in the lighting control device 110-j. However, at least part of the preprogrammed lighting control logic, the time periods T_{off,1}, T_{dim,1}, T_{off,2}, T_{dim,2} and/or the light intensities I_{tgt,1}, I_{dim,1}, I_{off,1}, I_{tgt,2}, I_{dim,2}, I_{foff,2} associated therewith may be adapted or complemented in the course of operation of the lighting control device 110-j via operation of the adaptation portion, as described in the following.

In this regard, the first switch-off period T_{off,1} and the second switch-off period T_{off,2} as well as the first dim-down period T_{dim,1} and the second dim-down period T_{dim,2}. may be initially set to respective default values, e.g. such that the first and second switch-off periods T_{off,1}, T_{off,2} are set to a first value and the first and second dim-down periods T_{dim,1}, T_{dim,2} are set to a second value that is smaller than the first value. The first value may be for example a suitable values chosen from the range from 5 to 10 minutes whereas the second value be in the order of a few minutes. Along similar lines, each of the first and second target light intensities I_{tgt,1}, I_{tgt,2} may be defined as a respective predefined percentage of the maximum light intensity of the respective ones of the light sources 121-j, 122-j, for example a respective suitable value chosen from the range from 70 % to 100 %, e.g. 80 %, may be applied. Along similar lines, each of the first and second intermediate light intensities I_{ing,1}, I_{int,2} may be defined as a(nother) respective predefined percentage of the maximum light intensity of the respective ones of the light sources 121-j, 122-j, for example a respective suitable value chosen from the range from 20 % to 50 %, e.g. 30 %, may be applied. Moreover, each of the stand-by light intensities I_{off,1}, I_{off,2} may be defined as a respective predefined percentage of the maximum light intensity of the respective ones of the light sources 121-j, 122-j, for example a respective suitable value chosen from the range from 0 % to 20 %, e.g. 0 % or 10 %, may be applied.

In general case, as described in the foregoing, the lighting control device 110-j may not have the knowledge regarding whether the first lighting characteristics (of the one or more first light sources 121-j) or the second lighting characteristics (of the one or more second light sources 122-1) are the ones arranged for the specific lighting while the other ones are arranged for the general lighting and in such a scenario the lighting control device 110-j may carry out a lighting type detection procedure described via an example later in this text. As a consequence of the lighting type detection procedure, at least some of the time periods T_{off,1}, T_{dim,1}, T_{off,2}, T_{dim,2} and/or at least some of the light intensities I_{tgt,1}, I_{dim,1}, I_{off,1}, I_{tgt,2}, I_{dim,2}, I_{foff,2} may be adapted accordingly by operation of the adaptation portion. As an example in this regard, with the knowledge that the one or more first light sources 121-j are the ones arranged to provide the specific lighting and the one or more second light sources 122-j are the ones arranged to provide the general lighting, the first switch-off period T_{off,1} may be set shorter than the second switch-off period T_{off,2} and the first dim-down period T_{dim,1} may be set shorter than the second dim-down period T_{dim,2}. Such selection of these time periods results in dimming down and/or switching off the specific lighting faster than dimming down and/or switching off the general lighting in response to the occupancy sensor signal indicating non-occupancy after period of occupancy, which ensures a reasonable trade-off between user comfort and energy consumption.

Along the lines described in the foregoing, the lighting control logic may result in the lighting control device 110-j also controlling the light output of the luminaire unit 120-j based at least in part on the sensor signal from a light sensor of the sensor assembly 140-j. In general, the lighting control device 110-j may be arranged to take a predefined lighting control action (e.g. switch the light on or off or adjust the light intensity) in response to a respective predefined local triggering condition that directly or indirectly pertains to the light sensor signal. Non-limiting examples in this regard include the following:
- The lighting control device 110-j may be arranged to, in response to the light sensor signal indicating light level that is below a predefined first target light level L_{tgt,1} by more than a first margin M₁, increase the light intensity of the one or more first light sources 121-j until the light sensor signal indicates light level that meets the first target light level L_{tgt,1} (or until reaching 100 % light intensity).
- The lighting control device 110-j may be arranged to, in response to the light sensor signal indicating light level that exceeds the first target light level L_{tgt,1} by more than the first margin M₁, decrease the light intensity of the one or more first light sources 121-j until the light sensor signal indicates light level that meets the first target light level L_{tgt,1} (or until reaching 0 % light intensity).
- The lighting control device 110-j may be arranged to, in response to the light sensor signal indicating light level that is below a second predefined target light level L_{tgt,2} by more than a second margin M₂, increase the light intensity of the one or more second light sources 122-j until the light sensor signal indicates light level that meets the second target light level L_{tgt,2} (or until reaching 100 % light intensity).
- The lighting control device 110-j may be arranged to, in response to the light sensor signal indicating light level that exceeds the second target light level L_{tgt,2} by more than the second margin M₂, decrease the light intensity of the one or more second light sources 122-j until the light sensor signal indicates light level that meets the second target light level L_{tgt,2} (or until reaching 0 % light intensity).

Hence, the lighting control device 110-j may be arranged to apply the light sensor signal to adjust the light intensity of the light output from the luminaire unit 120-j such that its own light output in combination with light provided by other sources (e.g. other lighting units 130-j of the lighting arrangement 100 and/or environmental light) provides illumination at the respective target light levels L_{tgt,1}, L_{tgt,2}.

The above-described aspects of the lighting control logic that involve taking a respective predefined lighting control action in response to a respective predefined local triggering condition that directly or indirectly pertains to the light sensor signals may (also) constitute (part of the) preprogrammed operation the lighting control device 110-j, which may be defined by configuring the lighting control device 110-j to operate accordingly upon manufacturing the lighting control device 110-j and stored e.g. as program code stored in a memory in the lighting control device 110-j that will be executed by a processor in the lighting control device 110-j in the course of its operation. Moreover, also the target light levels L_{tgt,1}, L_{tgt,2} and the margins M₁, M₂ may be initially set to respective preprogrammed values, which are stored in the memory provided in the lighting control device 110-j. However, at least part of also this aspect preprogrammed lighting control logic and or the associated control parameters L_{tgt,1}, L_{tgt,2}, M₁, M₂, associated therewith may be adapted or complemented in the course of operation of the lighting control device 110-j via operation of the adaptation portion, as described in the following.

As described in the foregoing, the lighting control device 110-j comprises the communication portion that enables the lighting unit 130-j to wirelessly communicate with other lighting units 130 of the lighting arrangement 100. In this regard, the communication portion may comprise a wireless transceiver capable of communicating with other luminaires using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy, ZigBee, WLAN/Wi-Fi according to a IEEE 802.11 standard, etc. Further examples include infra-red communications and other non-radio-based short-range communication techniques. The choice of the short-range wireless communication for a specific embodiment of the lighting arrangement 100 may depend e.g. on the required communication range and/or requirements with respect to energy-efficiency of the communication means.

In the course of its operation, the lighting control device 130-j is arranged to transmit status indication messages via the communication portion therein. Each status indication message comprises one or more status indications pertaining to the current (or recent) operating status of the lighting control device 110-j transmitting the status indication message and it may further comprise information that serves to identify the lighting control device 110-j transmitting the status indication message, e.g. an address or other identifier assigned thereto. Conversely, the lighting control device 110-j receives status indication messages (and hence status indications) from other lighting control devices 110 of the lighting arrangement 100. Non-limiting examples of status indications are described in the following:
- A status indication may comprise an action indication that defines a lighting control action taken by the lighting control device 110-j that transmits the status indication. Examples of such action indications include an indication of switching on the light output from the one or more first light sources 121-j (at the first target light intensity I_{tgt,1}), an indication of switching off the light output from the one or more first light sources 121-j (e.g. adjusting the light output to the first stand-by light intensity I_{off,1}), an indication of switching on the light output from the one or more second light sources 122-j (at the second target light intensity I_{tgt,2}), an indication of switching off the light output from the one or more second light sources 122-j (e.g. adjusting the light output to the second stand-by light intensity I_{off,2}), etc. Further examples of such action indications include an action indication of keeping the light output from the one or more first light sources 121-j at the current light intensity (e.g. at the first target light intensity I_{tgt,1}) e.g. in response to the occupancy sensor indicating continued occupancy in the (portion of) space illuminated by the luminaire unit 130-j and an action indication of keeping the light output from the one or more second light sources 122-j at the current light intensity (e.g. at the second target light intensity I_{tgt,2}) e.g. in response to the occupancy sensor indicating continued occupancy in the (portion of) space illuminated by the luminaire unit 130-j.

- A status indication may comprise a light intensity indication that defines a new (or upcoming) light intensity level set by the lighting control device 110-j that transmits the status indication. Examples of such light intensity indications include an indication of setting the light output from the one or more first light sources 121-j at a certain light intensity level, e.g. the first target light intensity I_{tgt,1}, the first intermediate light intensity I_{int,1}, the first stand-by light intensity I_{off,1} or other light intensity or an indication of setting the light output from the one or more second light sources 122-j at a certain light intensity level, e.g. the second target light intensity I_{tgt,2}, the second intermediate light intensity I_{int,2}, the second stand-by light intensity I_{off,2} or other light intensity.
- A status indication may comprise a sensor indication that reports a sensor value obtained in or derived from a sensor signal from a sensor device of the sensor assembly 140-j. Examples of such sensor indications include an indication of the occupancy sensor signal indicating occupancy after a period of non-occupancy, an indication of the occupancy sensor signal indicating non-occupancy after a period of occupancy and an indication of the light level indicated by the light sensor signal.

The lighting control device 110-j may be arranged to transmit a status indication message comprising a respective action indication and/or a light intensity indication, for example, each time it takes a lighting control action (e.g. switch the light on or off or adjust the light intensity) in response to a respective predefined local triggering condition that directly or indirectly pertains to the occupancy sensor signals and/or to the light sensor signals. The lighting control device 110-j may be arranged to transmit a respective sensor indication that reports an occupancy status, for example, each time the occupancy sensor signal indicates a change from non-occupancy to occupancy or vice versa and/or the lighting control device 110-j may be arranged to transmit a respective sensor indication that reports the light level at predefined time intervals.

The lighting control device 110-j may be arranged to store, in the memory therein, a history of occurrences of local triggering conditions and the resulting lighting control actions it has taken in response to the local triggering conditions arising from the occupancy sensor signals and/or from the light sensor signals and a history of status indications received from the other lighting control devices 110. Moreover, the lighting control device 110-j may further store in the memory a history of status indications transmitted therefrom and possibly also a history of sensor data including occupancy status indications and light level indications derived based on respective sensor signals. The history information stored in the memory may cover a predefined time period and each piece of history data may be stored together with respective timing information that indicates the capturing time and/or the transmission time of a respective piece of stored data (whichever applies). The timing information may comprise a respective timestamp that indicates time with respect to a predefined reference time.

The adaptation portion in the lighting control device 110-j is provided for adjusting the preprogrammed lighting control logic in accordance with the status indications received from the other lighting control devices 110 such that the adaptation portion is arranged to reprogram at least part of the first lighting control logic and the second lighting control logic differently from each other in dependence of the first and second lighting characteristics. Hence, the adaptation portion may be arranged to carry out a self-adaptation procedure to complement or at least partially reprogram preprogrammed lighting control logic of the lighting control portion such that control of the light output from the one or more first light sources 121-j (that may provide e.g. the specific lighting) is different from that of the light output from the one or more second light sources 122-j (that may provide e.g. the generic lighting).

The aspect of complementing or at least partially reprogramming the first lighting control logic and the second lighting control logic differently from each other may include, for example, defining one or more further triggering conditions for one or more predefined lighting control actions, adjusting one or more parameter values pertaining to triggering conditions associated with one or more predefined lighting control actions, disabling one or more triggering conditions and/or lighting control actions, etc. As a concrete non-limiting example in this regard, reprogramming the lighting control logic may comprise defining a first further triggering condition for a preprogrammed lighting control action defined in the first lighting control logic and/or defining a second further triggering condition for a preprogrammed lighting control action defined in the second lighting control logic, wherein the first further triggering condition is different from the second further triggering condition. In particular, the reprogramming may result in defining different first and second further triggering conditions for the same or similar lighting control action originally defined in the first and second lighting control logics.

As an example, the self-adaptation procedure may be initiated in response to a user command received e.g. via a user interface of the lighting control device 110-j or in a specific control message received via the communication portion. In another example, the self-adaptation procedure may be initiated in according to a predefined schedule, e.g. at predefined time intervals. In a further example, the self-adaptation procedure is carried out continuously or substantially continuously.

According to a non-limiting example, some aspects of the self-adaptation procedure with respect to a given local triggering condition may be carried out, for example, along the lines described in paragraphs [0032] to [0058] of the European patent publication no. 3171674 A1. Even though the examples pertaining to the analysis procedure are described therein with references to determination of a relationship strength that is indicative of regularity at which 'triggering local input signals' have been observed after first having received an 'indication message from a 'particular other device', the procedure equally applies to determination of a relationship strength that is indicative of regularity at which a given local triggering condition has been observed after first having received a given status indication from a particular other lighting control device 110, *mutatis mutandis.*

However, a key aspect in the operation of the lighting control device 130-j is that one or more aspects of the analysis and/or one or more aspects of complementing or reprogramming the preprogrammed lighting control logic accordingly may be different for the first lighting control logic and for the second lighting control logic, even though the reprogramming in based on an analysis that relies on the same status indications received from the other luminaire units 130 of the lighting arrangement 100 and/or on the same sensor data obtained from the sensor assembly 140-j. The different reprogramming may be carried out in dependence of the respective lighting characteristic of the one or more first light sources 121-j and the one or more second light sources 122-j. In a non-limiting example, this may involve complementing or reprogramming the lighting control logic pertaining to control of the one or more first light sources 121-j that are arranged for the specific lighting differently from reprogramming the second lighting control logic pertaining to the one or more second light sources 122-j that are arranged for the general lighting.

Along the lines described in paragraphs [0032] to [0058] of the European patent publication no. 3171674 A1, in this regard the operation of the adaptation portion may involve, for example, determining a relationship strength that is pertinent to a particular other lighting control device 110-k, wherein the relationship strength comprises an indication of regularity at which a given local triggering condition has been observed after first receiving a given status indication from the particular other lighting control device 110-k and reprogramming the lighting control logic to further define that the light output from the one or more first light sources 121-j and/or from the one or more second light sources 122-j is to be set or adjusted to a respective preparatory light intensity I_{pre,1}, I_{pre,2} in response to receiving the given status indication from the particular other lighting control device 110-k. In this regard, the lighting control logic may be reprogrammed to respond to the reception of a further given status indication from said particular other lighting control device 110-k by setting the light output from the one or more first light sources 121-j and/or from the one or more second light sources 122-j to the respective preparatory light intensity I_{pre,1}, I_{pre,2} that lies between the respective stand-by light intensity I_{off,1}, I_{off,2} and the respective target light intensity I_{tgt,1}, I_{tgt,2}, the relative difference between the respective preparatory light intensity I_{pre,1}, I_{pre,2} and the respective stand-by light intensity I_{off,1}, I_{off,2} in relation to the difference between the respective target light intensity I_{tgt,1}, I_{tgt,2} and the respective stand-by light intensity I_{off,1}, I_{off,2} being proportional to the respective relationship strength.

The relationship strength derived in view of the given local triggering condition is a measure that pertains to a given status indication from the particular other lighting control device 110-k. Hence, for the given local triggering condition, the adaptation portion may define a dedicated relationship strength for a plurality of pairs of a status indication and the other lighting control device 110-k (of the lighting arrangement 100).

Moreover, in an example, different reprogramming for the first lighting control logic and for second control logic may be provided by using the above-described procedure to separately define a first relationship strength and a second relationship strength (in view of the same local triggering condition for the same pair of the given status indication and the other lighting device 110-k) such that the fist relationship strength is determined differently from the second relationship strength. In this regard, the difference may arise from usage of different time windows for determination of the first and second relationship strengths, from usage of different membership functions for converting status indications in time windows to a set of descriptor values for determination of the first and second relationship strengths, from usage of different selection rules for picking the descriptor values for output membership functions for determination of the first and second relationship strengths, and/or from usage of different computation of a relationship strength based on specific values of the output membership functions for determination of the first and second relationship strengths. In another example, different reprogramming for the first lighting control logic and for second control logic may be provided by using the above-described procedure to define one of the first and second relationship strengths and deriving the other one from the derived relationship strength by a predefined rule.

The first preparatory light intensity I_{pre,1} may be derived based on the first relationship strength and the second preparatory light intensity I_{pre,2} may be derived based on the second relationship strength, for example by using the approach described in the foregoing. Consequently, the reprogramming may result in complementing the first lighting control logic to further define that the light output from the one or more first light sources 121-j is to be set or adjusted to a first preparatory light intensity I_{pre,1} in response to receiving the given status indication from the particular other lighting control device 110-k and complementing the second lighting control logic to define that the light output from the one or more second light sources 122-j is to be set or adjusted to a second preparatory light intensity I_{pre,2} in response to receiving the given status indication from the particular other lighting control device 110-k.

In another example, a single relationship strength that is pertinent to a particular other lighting control device 110-k may be derived, and the reprogramming of the lighting control logic may involve reprogramming the first lighting control logic in dependence of the single relationship strength in view of a first relationship strength threshold and reprogramming the second lighting control logic in dependence of the single relationship strength in view of a second relationship strength threshold. Herein, assuming that the one or more first light sources 121-j are arranged for the specific lighting and the one or more second light sources 122-j are arranged for the general lighting, the first relationship strength threshold is higher than the second relationship strength threshold. In particular, reprogramming may comprise reprogramming the first lighting control logic, in response to the single relationship strength exceeding the first relationship strength threshold, to further define that the light output from the one or more first light sources 121-j is to be set or adjusted to the first target light intensity I_{tgt,1} in response to receiving the given status indication from the particular other lighting control device 110-k and reprogramming the second lighting control logic, in response to the single relationship strength exceeding the second relationship strength threshold, to further define that the light output from the one or more second light sources 122-j is to be set or adjusted to the second target light intensity I_{tgt,2} in response to receiving the given status indication from the particular other lighting control device 110-k. In a further example, the self-adaptation procedure may comprise an analysis of status indications received from the other lighting control devices 110 in an attempt to identify a repeatedly occurring pattern that includes a certain sequence of one or more received status indications followed by a given local triggering condition and, in case of identifying such repeatedly occurring pattern, complementing or reprogramming the lighting control logic in the lighting control device 110-j to carry out the lighting control action associated with the given local triggering condition in response to reception of said given sequence of one or more status indications included in the identified pattern. The self-adaptation procedure may be carried out separately for a plurality of the local triggering conditions (and the associated lighting control actions) defined for the lighting control device 110-j. In this regard, some aspects of the analysis part of the self-adaptation procedure with respect to a single given local triggering condition may be carried out, for example, along the lines described in paragraph [0033] of the European patent publication no. 2919562 A1.

According to an example, the analysis of received status indications may identify one or more different patterns that involve the given local triggering condition, each identified pattern occurring at least a predefined number of times. Hence, the analysis identifies one or more candidate sequences of one or more status indications that are followed by a respective occurrence of the given local triggering condition, and the analysis may be followed by complementing or reprogramming the lighting control logic of the lighting control device 110-j in accordance with the one or more candidate sequences. A candidate sequence is considered as a repeatedly occurring one in case it meets one or more predefined criteria pertaining to its number and/or frequency of occurrences in combination with the given local triggering condition, where the predefined criteria may depend on the given local triggering condition under consideration and/or on the lighting characteristics of the light source(s) to which the lighting control action carried out in response to the given local triggering condition pertains. Moreover, the aspect of complementing or reprogramming the lighting control logic of the lighting control device 110-j may be carried out in dependence of the lighting control action associated with the given local triggering condition under consideration and/or in dependence of the lighting characteristics of the light source(s) to which the lighting control action associated with the given local triggering condition pertains.

In an example in this regard, the adaptation means may consider a respective different subset of status indications in the analysis that aims at identifying the repeatedly occurring patterns of the kind described in the foregoing for lighting control actions defined in the first and second lighting control logics. In other words, the analysis pertaining to a local triggering condition of a pair of the triggering condition and the associated lighting control action defined in the first lighting control logic may consider a first subset of status indications whereas the analysis pertaining to a local triggering condition of a pair of the triggering condition and the associated lighting control action defined in the second lighting control logic may consider a second sub-set of status indications, where the first subset is different from the second subset.

In another example, alternatively or additionally, the analysis pertaining to a local triggering condition of a pair of the triggering condition and the associated lighting control action defined in the first lighting control logic may consider patterns that include a certain sequence of at most a first number of status indications whereas the analysis pertaining to a local triggering condition of a pair of the triggering condition and the associated lighting control action defined in the second lighting control logic may consider patterns that include a certain sequence of at most a second number of status indications, where the first number is different from the second number. In a further example, alternatively or additionally, the analysis pertaining to a local triggering condition of a pair of the triggering condition and the associated lighting control action defined in the first lighting control logic may consider patterns that include status indications received from at most a first number of other luminaire units 130 whereas the analysis pertaining to a local triggering condition of a pair of the triggering condition and the associated lighting control action defined in the second lighting control logic may consider patterns that include status indications received from at most a second number of other luminaire units 130, where the first number is different from the second number.

As non-limiting concrete examples of the analysis relying on different subsets of status indications, different maximum number of status indications and/or different maximum number of other luminaire units 130 serving as the source of status indications for the lighting control actions of the first and second lighting control logics, assuming that the first lighting control logic pertains to the specific lighting and the second lighting control logic pertains to the general lighting, the adaptation means may apply one or more of the following:
- The first subset of status indications considered in the analysis may comprise an action indication that defines another lighting control device 120-k keeping the light output from the one or more first light sources 121-k at the current light intensity whereas the second subset of status indications considered in the analysis may comprise an action indication that defines another lighting control device 120-k having switched on the light output from the one or more first light sources 121 - k.
- The first (maximum) number of status indications considered in the analysis may be smaller than the second (maximum) number of status indications considered in the analysis. As an example, the first (maximum) number of status indications considered in the analysis may be one whereas the second (maximum) number of status indications considered in the analysis may be larger than one, e.g. two, three, four or five.
- The first number of sources of status indications (i.e. other lighting units 130) considered in the analysis may be smaller than the second number of sources of status indications considered the analysis. As an example, the first number of sources considered in the analysis may be one whereas the second number of sources considered in the analysis may be larger than one, e.g. two, three, four or five.

Further non-limiting examples of the analysis of status indications received from the other lighting control devices 110 in an attempt to identify a repeatedly occurring pattern that includes a certain sequence of one or more received status indications followed by a given local triggering condition are provided in the following:
- The adaptation means may consider a given candidate sequence to be a repeatedly occurring one in response to the given candidate sequence preceding at least a predefined percentage of occurrences of a given local triggering condition, wherein the percentage defined for analysis of a local triggering condition associated with a lighting control action of the first lighting control logic is different from that defined for a local triggering condition associated with a lighting control action of the second lighting control logic. Assuming that the first lighting control logic pertains to the specific lighting and the second lighting control logic pertains to the general lighting, the percentage applied in the analysis that pertains to the first lighting control logic may be higher than the percentage applied in the analysis that pertains to the second lighting control logic.
- The adaptation means may consider status indications received within a predefined time window preceding a respective occurrences of a given local triggering condition in identification of a repeatedly occurring pattern, wherein the time window has a different duration for analysis of a local triggering condition associated with a lighting control action of the first lighting control logic from that applied for analysis of a local triggering condition associated with a lighting control action of the second lighting logic. Assuming that the first lighting control logic pertains to the specific lighting and the second lighting control logic pertains to the general lighting, the time window applied in the analysis that pertains to the first lighting control logic may be shorter than that applied in the analysis that pertains to the second lighting control logic.
- The adaptation means may consider a predefined number of most recently received status indications in identification of a repeatedly occurring pattern, wherein the predefined number is different for analysis of a local triggering condition associated with a lighting control action of the first lighting control logic from that applied for analysis of a local triggering condition associated with a lighting control action of the second lighting logic. Assuming that the first lighting control logic pertains to the specific lighting and the second lighting control logic pertains to the general lighting, the predefined number applied in the analysis that pertains to the first lighting control logic may be smaller than that applied in the analysis that pertains to the second lighting control logic.

Hence, if applied in a scenario where the first lighting control logic pertains to (and the one or more first light sources 121-j are arranged for) the specific lighting and the second lighting control logic pertains to (and the one or more second light sources 122-j are arranged for) the general lighting, the examples of operation of the adaptation means provided above hence causes the lighting control device 110-j to be more sensitive in adjusting the general lighting from the lighting unit 130-j to follow lighting control actions implemented in other lighting units 130 of the lighting arrangement 100 (in comparison to sensitivity in adjusting the specific lighting from the lighting unit 130-j to follow lighting control actions in other lighting units 130).

A concrete example regarding a reprogrammed local triggering condition and the respective lighting control action to be carried out in response to an occurrence of the local triggering condition that may serve as basis for the reprogramming may involve switching on the one or more first light sources 121-j and switching on the one or more second light sources 122-j that typically both are preprogrammed to take place in response to the occupancy sensor signal indicating occupancy after a period of non-occupancy.

Hence, if applied in a scenario where the first lighting control logic pertains to (and the one or more first light sources 121-j are arranged for) the specific lighting and the second lighting control logic pertains to (and the one or more second light sources 122-j are arranged for) the general lighting, the self-adaptation procedure may be arranged to cause the lighting control device 110-j to be more sensitive in adjusting the general lighting from the lighting unit 130-j to follow lighting control actions implemented in other luminaire units 130 of the lighting arrangement 100 (in comparison to sensitivity in adjusting the specific lighting from the lighting unit 130-j to follow lighting control actions in other luminaire units 130). If applied, for example, to respective lighting control actions of the lighting control device 130-j that, respectively, pertain to switching on the one or more first light sources 121-j and to switching on the one or more second light sources 122-j, this results in a relatively high number of lighting units 130 of the lighting system switching on the general lighting thereof in response to the lighting control device 110 in one of the lighting units 130 detecting occupancy, while the specific lighting may be provided only from that lighting unit 130 in which the lighting control device 110 has detected occupancy and/or from a small number of lighting units 130 arranged to illuminate the portions of space in its immediate vicinity.

A further aspect of the self-adaptation procedure(s) of the lighting control device 110-j may comprise the adaptation portion identifying those other luminaire units 130 that provide direct lighting that is observable by the sensor assembly 140-j and making this information available in the lighting arrangement 100 to enable the lighting control device 110-j and/or the respective lighting control devices 110 in other lighting units 130 of the lighting arrangement 100 to adjust one or more aspects of lighting control logic in the respective lighting control device 110-j, 110 accordingly. As described in the foregoing, the lighting control device 110-j may store in the memory, on one hand, the status indications received from the other lighting control units 130 and, on the other hand, light level indications derived based on light sensor signals obtained from the sensor assembly 140-j. Based on this information, the lighting control device 110-j may detect those other lighting units 130 that provide specific (e.g. direct) lighting that is visible at the sensor assembly 140-j, for example, according to the following procedure:
- Identify, based on the received status indications stored in the memory, a status indication received from a lighting control device 110-k indicating that it has switched on the light output from the one or more first light sources 121-k or indicating that it has switched on the light output from the one or more second light sources 122-k;
- Compute, based on the light level indications stored in the memory, the difference in the measured light level after and before switching on the light output from the respective ones of the one or more first light sources 121-k and one or more second light sources 122-k;
- Derive, based on the computed difference and in view of a predefined threshold value, a visibility indication regarding visibility of the (specific, e.g. direct) lighting from the lighting unit 130-k in the lighting control device 110-j: the visibility indication pertaining to the luminaire unit 130-k is set to indicate visibility in response to the computed difference exceeding the threshold value and the visibility indication pertaining to the luminaire unit 130-k is set to indicate non-visibility in response to the computed difference failing to exceed the threshold value; and
- Store the visibility indication in the memory of the lighting control device 110-j and/or transmit the visibility indication as status indication to the lighting control device 110-k of the lighting unit 130-k.

The lighting control device 110-j may apply the above-described detection procedure to verify the visibility of specific (e.g. direct) lighting from a plurality of other lighting units 130 of the lighting arrangement. In this regard, in the course of the detection procedure, the lighting control device 110-j may further store the computed difference in the measured light level after and before switching on the light output in the lighting unit 130-k, thereby storing (in addition to the visibility indication) a received light level indication pertaining to the lighting unit 130-k, which received light level indication is indicative of the amount of light received from the lighting unit 130-k in (a portion of) a space illuminated by the lighting unit 130-j. The lighting control device 110-j may further transmit the received light level indication pertaining to the lighting unit 130-k (e.g. together with the visibility indication) as a status indication to the lighting control device 110-k of the lighting unit 130-k.

As described above, once the visibility indication pertaining to the luminaire unit 130-k has been derived, the lighting control device 110-j may transmit a status message comprising a status indication that comprises the visibility indication pertaining to the (specific) lighting of the lighting unit 130-k. Conversely, the lighting control device 110-j may receive corresponding status indications pertaining to the visibility of the direct lighting from the lighting unit 130-j from respective lighting control devices 110 of one or more other lighting units 130 and store this information in the memory therein.

The adaptation portion of the lighting control device 130-j may further adjust or reprogram the lighting control logic pertaining to the specific lighting in dependence of the visibility indication(s) received from the other luminaire units 130. As an example in this regard, assuming once again that the one or more first light sources 121-j are the ones arranged for the specific lighting, adaptation portion may further reprogram the first lighting control logic by disabling the reprogrammed aspect of setting the light output from the first light sources 121-j to the first preparatory light intensity I_{pre,1} in response to receiving the given status indication from the other lighting control device 130-k in case the lighting control device 110-j receives or has received, from the lighting control device 130-k, a visibility indication indicating non-visibility of its specific lighting at the location (of the sensor assembly 140-k) of the lighting unit 130-k. In such a situation, however, the lighting control device 110-j may be still arranged to switch on the light output from the one or more first light sources 121-j in response to one or more other reprogrammed triggering conditions and/or in response to the preprogrammed triggering condition (e.g. the occupancy sensor signal indicating occupancy after a period of non-occupancy). Such operation of the lighting control device 110-j may result in energy savings substantially without compromising user comfort since even though switching on the direct lighting from the luminaire unit 130-j may be delayed to some extent, at the same time the indirect lighting from the luminaire unit 130-j has been already switched on via a respective reprogrammed triggering condition pertaining to the lighting control action of switching on the light output from the one or more second light sources 122-j.

A further aspect of the self-adaptation procedure(s) of the lighting control device 110-j may comprise the adaptation portion operating to further reprogram the lighting control logic pertaining the specific lighting based on the stored information that is indicative of the amount of light received from the lighting unit 130-k in (a portion of) a space illuminated by the lighting unit 130-j. Once again assuming that the one or more first light sources 121-j are the ones arranged for the specific lighting, this aspect of reprogramming concerns the first lighting control logic. In this regard, the adaptation portion may further reprogram the lighting control logic to set or adjust the light intensity of the one or more first light sources 121-j in dependence of the received light level indication pertaining to the lighting unit 130-j received from the lighting control device 110-k of the lighting unit 130-k. As an example in this regard, in case the received light level indication received from the lighting control device 110-k indicates light level that exceeds a predefined light level threshold, the adaptation portion may reprogram the first lighting control logic in the lighting control device 110-j to switch on the light output from the one or more first light sources 121-j as a response to a status indication indicating the lighting control device 110-k (in the lighting unit 130-k) has switched on the light output from the one or more first light sources 121-k.

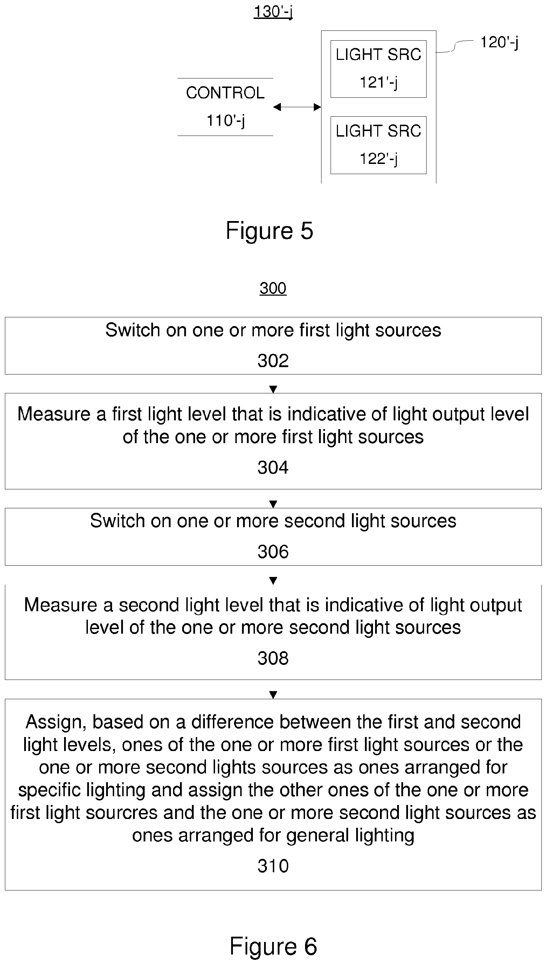

Figure 5 illustrates, as an illustrative example that falls outside the scope of the present invention, a block diagram of some logical components of a lighting unit 130'-j, which comprises a lighting control device 110'-j and the luminaire unit 120-j. The lighting unit 130'-j may be employed in the lighting arrangement 100 together with one or more lighting units 130. The lighting unit 130'-j is similar to the lighting unit 130-j described in the foregoing (and in the following) via a number of examples, apart from the fact that the lighting unit 130'-j does not comprise the sensor assembly 140-j and, consequently, the lighting control logic in the lighting control device 110'-j relies on the status indications received from other lighting units 130 of the lighting arrangement

The adaptation portion in the lighting control device 110'-j may carry out a neighborhood detection procedure that may comprise e.g. the following steps:
- Broadcast a status indication concerning the lighting control unit 110'-j initiating the neighborhood detection procedure.
- Switch on the specific lighting from the lighting unit 130'-j.
- Receive respective light level indications pertaining to the light output from the lighting unit 120'-j from respective lighting control devices 110 of one or more lighting units 130 of the lighting arrangement 100. In this regard, upon receiving the status indication concerning initiation of the neighborhood detection procedure, the lighting control devices 110 may derive the respective light level indications pertaining to the lighting unit 130'-j, for example, as described in the foregoing and transmit the derived light level indications as status indications to the lighting control device 110'-j.
- Switch off the specific lighting from the lighting unit 130'-j.

After having carried out the neighborhood detection function for at least a predetermined number of times and detecting that light level indications received from a lighting control device 110-j exceed a predefined light level threshold, the adaptation portion may reprogram the lighting control logic in the lighting control device 110'-j to define e.g. one or more of the following:
- Set the light output from the one or more first light sources 121-j at the target light intensity I_{tgt,1} in response to receiving a status indication that indicates that the lighting unit 130-k has switched on the light output from the one or more first light sources 121-k.
- Set the light output from the one or more second light sources 121-j at the target light intensity I_{tgt,2} in response to receiving a status indication that indicates that the lighting unit 130-k has switched on the light output from the one or more second light sources 122-k.
- Set the light output from the one or more first light sources 121-j at the stand-by light intensity I_{off,1} in response to receiving a status indication that indicates that the lighting unit 130-k has set the light output from the one or more first light sources 121-k to the stand-by light intensity.
- Set the light output from the one or more second light sources 121-j at the stand-by light intensity I_{off,2} in response to receiving a status indication that indicates that the lighting unit 130-k has set the light output from the one or more second light sources 122-k to the stand-by light intensity.

Hence, the adaptation portion may reprogram the lighting control device 110'-j to follow at least some light control actions carried out by the lighting control device 110-k of the lighting unit 130-k that has been found in the neighborhood detection procedure, based on the light level indications received therefrom, to be in close proximity of the lighting unit 130'-j. Consequently, the lighting unit 130'-j is preprogrammed to at least partially follow the preprogrammed and/or the reprogrammed lighting control logic of the lighting unit 130-k.

The operations described in the foregoing with references to the lighting control device 110-j may be also defined as a steps of method. As an example in this regard, Figure 4 depicts a flowchart that illustrates a method 200 for controlling light output from the luminaire unit 120-j. The operations described with references to blocks 202 to 208 pertaining to the method 200 may be varied or complemented in a number of ways, for example as described in the foregoing or in the following in context of the lighting control device 110-j.

The method 200 commences from operating the luminaire unit 120-j based on the preprogrammed lighting control logic that comprises a first lighting control logic for controlling light output from the one or more first light sources 121-j and a second lighting control logic for controlling light output from the one or more second light sources 122-j, as indicated in block 202. As described in the foregoing, the lighting control logic defines a plurality of pairs of a local triggering condition and a corresponding lighting control action to be carried out in response to an occurrence of the triggering condition. The method 200 further comprises obtaining information that indicates respective lighting characteristics of the one or more first light sources 121-j and the one or more second light sources 122-j, as indicated in block 204.

The method 200 further comprises receiving status indications from other lighting control devices 120, as indicated in block 206.The method 200 further comprises adjusting the lighting control logic in accordance with received status indications, wherein the adjustment comprises reprogramming at least part of the first lighting control logic and the second lighting control logic differently from each other in dependence of the respective lighting characteristics indicated for the one or more first light sources 121-j and for the one or more second light sources 122-j, as indicated in block 208.

As described in the foregoing, the lighting control device 110-j may or may not have a priori knowledge whether it is the one or more first light sources 121-j or the one or more second light sources 122-j that are arranged for the specific lighting (while the other ones are arranged for the general lighting) and the lighting control device 110-j may receive or otherwise obtain an indication in this regard. In an example, the lighting control device 110-j may receive such information after its installation in its usage environment. In another example, such indication may be received e.g. via a user interface of the lighting control device 110-j or in a specific control message received via the communication portion. In yet another example, the adaptation portion in the lighting control device 110-j may be arranged to carry out a lighting type detection procedure described in the following to obtain this information. In this regard, at least the following scenarios may be envisaged:
- The lighting control device 110-j may have the knowledge that either the one or more first light sources 121-j or the one or more second light sources 122-j are the ones arranged for the specific lighting while the other ones are arranged for the general lighting. Consequently, the lighting control device 110-j may apply the lighting type detection procedure to assign the one or more first light sources 121-j or the one or more second light sources 122-j as ones arranged for the specific lighting and assign the other ones as ones arranged for the general lighting.
- The lighting control device 110-j may not have any knowledge regarding respective lighting characteristics the one or more first light sources 121-j and the one or more second lights sources 122-j are arranged to provide. In such a scenario the lighting control device 110-j may apply the lighting type detection procedure to find out whether the one or more first light sources 121-j or the one or more second light sources 122-j are arranged for the specific lighting (while the other ones are arranged for the general lighting).

Indication of the lighting type for the first and second light sources 121-j, 122-j via operation of the lighting type detection procedure allows for convenient and flexible installation, configuration and reconfiguration of the luminaire unit 130-j via avoidance of a manual configuration or re-configuration upon installation or maintenance of the lighting unit 130-j, which is especially pronounced in a lighting arrangement 100 that includes a high number (up to tens or even hundreds) of lighting units 130 that are possibly installed in physical locations that are difficult to reach.

Regardless of the manner of obtaining the information regarding the respective lighting characteristics of the one or more first light sources 121-j and the one or more second light sources 122-j, the adaptation portion in the lighting control device 110-j may be arranged to complement or reprogram one or more aspects of the first lighting control logic and/or the second lighting control logic accordingly. Assuming that the one or more first light sources 121-j are the ones arranged for the specific lighting, the adaptation portion may set the first switch-off period T_{off,1} that pertains to switching the one or more first light sources 121-j to the first stand-by light intensity I_{off,1} to be shorter than the second switch-off period T_{off,2} that pertains to switching the one or more second light sources 122-j to the second stand-by light intensity I_{off,2}. This contributes towards the lighting unit 130-j providing the general lighting for a prolonged period of time even if no occupancy has been detected by the occupancy sensor of the sensor portion 140-j therein, while switching off the specific lighting relatively promptly after detecting non-occupancy after a period of occupancy. In case the one or more second light sources 122-j are the ones found to be arranged for the specific lighting, the adaptation of the switch-off periods T_{off,1}, T_{off,2} is the opposite from that described above, i.e. the first switch-off period T_{off,1} may be set longer than the second switch-off period Toff, 2.

Along similar lines, the one or more first light sources 121-j are the ones arranged for the specific lighting, the adaptation portion may set the first dim-down period T_{dim,1} that pertains to adjusting the one or more first light sources 121-j to the first intermediate light intensity I_{dim,1} to be shorter than the second dim-down period T_{dim,2} that pertains to adjusting the one or more second light sources 122-j to the second intermediate light intensity I_{dim,2}. This contributes towards the lighting unit 130-j providing the general lighting at the target light intensity for a prolonged period of time even if no occupancy has been detected by the occupancy sensor of the sensor portion 140-j therein, while dimming down the specific lighting relatively promptly after detecting non-occupancy after a period of occupancy. In case the one or more second light sources 122-j are the ones found to be arranged for the specific lighting, the adaptation of the dim-down periods T_{dim,1}, T_{dim,2} is the opposite from that described above, i.e. the first dim-down period T_{dim,1} may be set longer than the second dim-down period T_{dim,2}.

In the following, a non-limiting example of the lighting type detection procedure is described with references to a method 300 illustrated by a flowchart depicted in Figure 6. The operations described with references to blocks 302 to 310 pertaining to the method 300 may be varied or complemented in a number of ways, for example as described in the foregoing or in the following in context of the lighting control device 110-j.

The method 300 commences by the lighting control device 110-j switching on the light output from the one or more first light sources 121-j, as indicated in block 302. In this regard, the lighting control device 110-j may set the light output from the one or more first light sources 121-j at the first target light intensity I_{tgt,1}. The operations of block 302 may further comprise the lighting control device 110-j switching off the light output from the one or more second light sources 122-j or otherwise ensuring that the light output of the one or more second light sources 122-j is switched off.

The method 300 further comprises the lighting control device 110-j measuring a first light level that is indicative of light output level of the one or more first light sources 121-j, as indicated in block 304. In this regard, the lighting control device 110-j may carry out the light level measurement by reading the light sensor signal recording the first light level accordingly.

The method 300 comprises the lighting control device 110-j switching on the light output from the one or more second light sources 122-j, as indicated in block 306. In this regard, the lighting control device 110-j may set the light output from the one or more second light sources 122-j at the second target light intensity I_{tgt,2}, which is preferably the same or similar to the first target light intensity I_{tgt,1}. The operations of block 306 may further comprise the lighting control device 110-j switching off the light output from the one or more first light sources 121-j or otherwise ensuring that the light output of the one or more first light sources 121-j is switched off.

The method 300 further comprises the lighting control device 110-j measuring a second light level that is indicative of light output level of the one or more second light sources 122-j, as indicated in block 308. In this regard, the lighting control device 110-j may carry out the light level measurement by reading the light sensor signal recording the second light level accordingly.

The method 300 further comprises the lighting control device 110-j assigning, based on a difference between the first and second light levels, the one or more first light sources 121-j or the one or more second light sources 122-j as ones arranged for the specific lighting (and, implicitly, assigning the other ones as the ones arranged for the general lighting), as indicated in block 310. As an example, in this regard, the lighting control device 110-j may assign the one or more first light sources 121-j as the ones arranged for the specific lighting in response to the first light level exceeding the second light level and assign the one or more second light sources 122-j as the ones arranged for the specific lighting in response to the second light level exceed the first light level. In another example, the lighting control device 110-j may assign the one or more first light sources 121-j as the ones arranged for the specific lighting in response to the first light level exceeding the second light level at least by a first margin and assign the one or more second light sources 122-j as the ones arranged for the specific lighting in response to the second light level exceeding the first light level by at least said first margin. In case the difference between the first and second light levels does not exceed the first margin, the control device 110-j may assign both the one or more first light sources 121-j and the one or more second light sources 122-j as ones arranged for the generic lighting. Alternatively, a failure to detect a first-margin-exceeding difference between the first and second light levels may result in manual assignment of ones of the one or more first light sources 121-j and the one or more second light sources 122-j as ones arranged for the specific lighting (while the other ones are assigned as ones arranged for the general lighting).

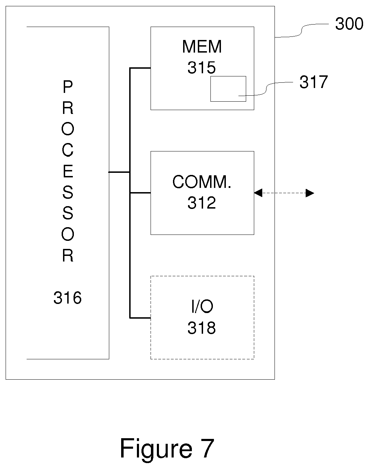

Figure 7 illustrates a block diagram of some components of an exemplifying apparatus 300. The apparatus 300 may comprise further components, elements or portions that are not depicted in Figure 7. The apparatus 300 may be referred to as a computing apparatus and it may be employed e.g. in implementing one or more components of the lighting control device 110-j, 110'-j.

The apparatus 300 comprises a processor 316 and a memory 315 for storing data and computer program code 317. The memory 315 and a portion of the computer program code 317 stored therein may be further arranged to, with the processor 316, to implement at least some of the operations, procedures and/or functions described in the foregoing in context of the lighting control device 110-j, 110'-j.

The apparatus 300 comprises a communication portion 312 for communication with other devices. The communication portion 312 comprises at least one communication apparatus that enables wired or wireless communication with other apparatuses. A communication apparatus of the communication portion 312 may also be referred to as a respective communication means.

The apparatus 300 may further comprise user I/O (input/output) components 318 that may be arranged, possibly together with the processor 316 and a portion of the computer program code 317, to provide a user interface for receiving input from a user of the apparatus 300 and/or providing output to the user of the apparatus 300 to control at least some aspects of operation of the lighting control device 110-j implemented by the apparatus 300. The user I/O components 318 may comprise hardware components such as a display, a touchscreen, a touchpad, an arrangement of one or more keys or buttons, etc. The user I/O components 318 may be also referred to as peripherals. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent! dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some of the operations, procedures and/or functions described in the foregoing in context of the lighting control device 110-j, 110'-j.

Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some of the operations, procedures and/or functions described in the foregoing in context of the lighting control device 110-j, 110'-i.

The computer programs stored in the memory 315 may be provided e.g. as a respective computer program product comprising at least one computer-readable non-transitory medium having the computer program code 317 stored thereon, the computer program code, when executed by the apparatus 300, causes the apparatus 300 at least to perform at least some of the operations, procedures and/or functions described in the foregoing in context of the lighting control device 110-j, 110'-j. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

In the present disclosure, although functions have been described with reference to certain features, those functions may be performable by other features whether described or not. Although features have been described with reference to certain embodiments, those features may also be present in other embodiments whether described or not.

## Claims

1. A lighting unit (130-j) comprising a luminaire unit (120-j), a sensor assembly (140-j) comprising one or more sensor devices for observing respective characteristics in a space illuminated by the luminaire unit (120-j) and a lighting control device (110-j) for controlling light output from the luminaire unit (120-j), wherein the luminaire unit (120-j) comprises one or more first light sources (121-j) arranged to provide lighting at first lighting characteristics and one or more second light sources (122-j) arranged to provide lighting at second lighting characteristics that are different from the first lighting characteristics at least in one aspect and wherein one of the first and second lighting characteristics comprises indirect lighting and the other one comprises direct lighting and wherein the sensor assembly (140-j) comprises at least one occupancy sensor for observing occupancy or non-occupancy of the space and/or at least one light sensor for observing ambient light level in the space, the lighting control device (110-j) comprising:
a control means for controlling light output from the luminaire unit (120-j), the control means preprogrammed with a lighting control logic that comprises a first lighting control logic for controlling light output from the one or more first light sources (121-j) and a second lighting control logic for controlling light output from the one or more second light sources (122-j),
**characterized in that** the control means is arranged to control the light output via implementing a preprogrammed lighting control logic that defines pairs of a local triggering condition and a corresponding lighting control action to be carried out in response to an occurrence of the local triggering condition, wherein the preprogrammed lighting control logic defines a manner of controlling light output from the luminaire unit (120-j), the control means arranged to obtain information that indicates the first and second lighting characteristics,
a communication means for wireless communication with other lighting control devices (110) that serve to control other luminaire units (120), the communication means configured to receive status indications from the other lighting control devices (110), and
an adaptation means for adjusting the preprogrammed lighting control logic in accordance with the status indications received by said communication means, wherein the adaptation means is arranged to reprogram at least part of the first lighting control logic and the second lighting control logic differently from each other in dependence of the first and second lighting characteristics based on the received status indications, wherein said reprogramming comprises one of the following:
- defining one or more further triggering conditions for one or more predefined lighting control actions,
- adjusting one or more parameters that pertain to one or more of the triggering conditions,
- disabling one or more of the triggering conditions and/or one or more of the lighting control actions.

2. A lighting unit (130-j) according to claim 1,
wherein the adaptation means is arranged to define a first further triggering condition for a preprogrammed lighting control action defined in the first lighting control logic and to define a second further triggering condition for a preprogrammed lighting control action defined in the second lighting control logic, wherein the first further triggering condition is different from the second further triggering condition.

3. A lighting unit (130-j) according to claim 1 or 2,
wherein the first lighting control logic defines setting light output from the one or more first light sources (121-j) to a first target light intensity in response to a local triggering condition and the second lighting control logic defines setting light output from the one or more second light sources (122-j) to a second target light intensity in response to said local triggering condition, and
wherein the adaptation means is arranged to:
determine first and second relationship strengths pertinent to a particular other lighting control device (110-k), wherein said first and second relationship strengths comprise respective indications of regularity at which said local triggering condition has been observed after first receiving a given status indication from said particular other lighting control device (110-k), wherein the first relationship strength is determined differently from the second relationship strength, reprogram, in dependence of the first relationship strength, the first lighting control logic to further define switching on the light output from the one or more first light sources (121-j) as a response to receiving said given status indication from said particular other lighting control device (110-k), and
reprogram, in dependence of the second relationship strength, the second lighting control logic to further define switching on the light output from the one or more second light sources (122-j) as a response to receiving said given status indication from said particular other lighting control device (110-k).

4. A lighting unit (130-j) according to claim 3, wherein said local triggering condition comprises an occupancy sensor signal indicating occupancy and wherein said given status indication comprises one of the following:
an indication of said particular other lighting control device (110-k) having switched on the one or more first light sources (121-j) at a respective target light intensity,
an indication of said particular other lighting control device (110-k) having switched on the one or more second light sources (122-j) at a respective target light intensity.

5. A lighting unit (130-j) according to claim 1 or 2,
wherein the adaptation means is arranged to adjust the lighting control logic in accordance with a repeatedly occurring pattern where a given sequence of one or more status indications is followed by a given local triggering condition, wherein the adaptation means is arranged to reprogram at least part of the lighting control logic as a response to identifying said repeatedly occurring pattern and wherein a criterion applied to identify a pattern as a repeatedly occurring one is different for lighting control actions of the first lighting control logic from that applied for lighting control actions of the second lighting control logic.

6. A lighting unit (130-j) according to claim 1 or 2,
wherein the first lighting control logic defines setting light output from the one or more first light sources (121-j) to a first target light intensity in response to a local triggering condition and the second lighting control logic defines setting light output from the one or more second light sources (122-j) to a second target light intensity in response to said local triggering condition, and
wherein the adaptation means is arranged to:
identify, according to one or more first criteria, a first repeatedly occurring pattern wherein a first sequence of one or more status indications is followed by said local triggering condition and identify, according to one or more second criteria, a second repeatedly occurring pattern where a second sequence of one or more status indications is followed by said local triggering condition, wherein the one or more first criteria is different from the one or more second criteria,
reprogram the first lighting control logic to further define switching on the light output from the one or more first light sources (121-j) as a response to receiving said first sequence of one or more status indications, and
reprogram the second lighting control logic to further define switching on the light output from the one or more second light sources (122-j) as a response to receiving said second sequence of one or more status indications.

7. A lighting unit (130-j) according to claim 6, wherein one of the following applies:
the one or more first criteria define a first subset of status indications for consideration in identification of the first repeatedly occurring pattern and the one or more second criteria define a second subset of status indications for consideration in identification of the second repeatedly occurring pattern, which second subset is different from the first subset,
the one or more first criteria defines a first maximum number of status indications included in the first sequence for consideration in identification of the first repeatedly occurring pattern and the one or more second criteria defines a second maximum number of status indications included in the second sequence for consideration in identification of the second repeatedly occurring pattern, which second maximum number is different from the first maximum number,
the one or more first criteria define a first maximum number of other lighting control devices (110) for consideration in identification of the first repeatedly occurring pattern and the one or more second criteria define a second maximum number of other lighting control devices (110) for consideration in identification of the second repeatedly occurring pattern, which second maximum number is different from the first maximum number.

8. A lighting unit (130-j) according to claim 3 or 4, wherein the adaptation means is arranged to:
receive, from said particular other lighting control device (110-k), a visibility indication indicating non-visibility of direct lighting from the luminaire unit (120-j) at a location of said particular other lighting control device (110-k), and
disable, in response to said visibility indication, the reprogramming applied to the first lighting control logic for switching on the light output from the one or more first light sources (121-j) as a response to receiving said given status indication from said particular other lighting control device (110-k).

9. A lighting unit (130-j) according to claim 1, wherein the adaptation means is arranged to:
receive a plurality of light level indications pertaining to light output from the lighting unit (130-j) from a particular other lighting control device (110-k) that indicate light level exceeding a predefined light level threshold, reprogram the lighting control logic in one or more of the following ways:
reprogram the first lighting control logic to define setting the light output from the one or more first light sources (121-j) to a first target light intensity in response to receiving an indication of said particular other lighting control device (110-k) having switched on the one or more first light sources (121-k);
reprogram the first lighting control logic to define setting the light output from the one or more first light sources (121-j) to a first stand-by light intensity in response to receiving an indication of said particular other lighting control device (110-k) having set the one or more first light sources (121-k) to a respective stand-by light intensity;
reprogram the second lighting control logic to define setting the light output from the one or more second light sources (122-j) to a second target light intensity in response to receiving an indication of said particular other lighting control device (110-k) having switched on the one or more second light sources (122-k).
reprogram the second lighting control logic to define setting the light output from the one or more second light sources (122-j) to a second stand-by light intensity in response to receiving an indication of said particular other lighting control device (110-k) having set the one or more second light sources (122-k) to a respective stand-by light intensity.

10. A lighting unit (130-j) according to any of claims 1 to 9, where the control means is arranged to carry out a lighting type detection procedure comprising:
switching on (302) the one or more first light sources (121-j);
measuring (304) a first light level that is descriptive of light output level of the one or more first light sources (121-j);
switching on (306) the one or more second light sources (122-j);
measuring (308) a second light level that is descriptive of light output level of the one or more second light sources (122-j); and
indicating, based on a difference between the first and second light levels, either the one or more light sources (121-j) or the one or more second light sources (122-j) as the ones arranged for the direct lighting and indicating the other ones of the one or more light sources (121-j) or the one or more second light sources (122-j) as the ones arranged for the indirect lighting.

11. A lighting unit (130-j) according to any of claims 1 to 10, wherein
the first lighting control logic defines switching the light output from the one of more first light sources (121-j) to a first stand-by light intensity in response to a first period of non-occupancy,
the second lighting control logic defines switching the light output from the one of more second light sources (122-j) to a second stand-by light intensity in response to a second period of non-occupancy,
the adaptation means is arranged to set the first period and the second period to respective different values in dependence of the first and second lighting characteristics.

12. A method (200) for controlling light output from a luminaire unit (120-j) based on sensor data obtained from a sensor assembly (140-j) comprising one or more sensor devices for observing respective characteristics in a space illuminated by the luminaire unit (120-j), the luminaire unit (120-j) comprising one or more first light sources (121-j) arranged to provide lighting at first lighting characteristics and one or more second light sources (122-j) arranged to provide lighting at second lighting characteristics that are different from the first lighting characteristics at least in one aspect and wherein one of the first and second lighting characteristics comprises indirect lighting and the other one comprises direct lighting and the sensor assembly (140-j) comprising at least one occupancy sensor for observing occupancy or non-occupancy of the space and/or at least one light sensor for observing ambient light level in the space, the method (200) comprising:
operating (202) the luminaire unit (120-j) based on a preprogrammed lighting control logic that comprises a first lighting control logic for controlling light output from the one or more first light sources (121-j) and a second lighting control logic for controlling light output from the one or more second light sources (122-j),
**characterized in that** the preprogrammed lighting control logic defines pairs of a local triggering condition and a corresponding lighting control action to be carried out in response to an occurrence of the local triggering condition, wherein the preprogrammed lighting control logic defines a manner of controlling light output from the luminaire unit (120-j),
obtaining (204) information that indicates the first and second lighting characteristics,
receiving (206) status indications from-the-other lighting control devices (110), and
adjusting (208) the preprogrammed lighting control logic in accordance with the received status indications, wherein said adjusting comprises reprogramming at least part of the first lighting control logic and the second lighting control logic differently from each other in dependence of the first and second lighting characteristics based on the received status indications, wherein said reprogramming comprises one of the following:
- defining one or more further triggering conditions for one or more predefined lighting control actions,
- adjusting one or more parameters that pertain to one or more of the triggering conditions,
- disabling one or more of the triggering conditions and/or one or more of the lighting control actions.

13. A computer program (317) for controlling light output from a luminaire unit (120-j) based on sensor data obtained from a sensor assembly (140-j) comprising one or more sensor devices for observing respective characteristics in a space illuminated by the luminaire unit (120-j), the luminaire unit (120-j) comprising one or more first light sources (121-j) arranged to provide lighting at first lighting characteristics and one or more second light sources (122-j) arranged to provide lighting at second lighting characteristics that are different from the first lighting characteristics at least in one aspect and wherein one of the first and second lighting characteristics comprises indirect lighting and the other one comprises direct lighting and the sensor assembly (140-j) comprising at least one occupancy sensor for observing occupancy or non-occupancy of the space and/or at least one light sensor for observing ambient light level in the space, the computer program (317) comprising computer readable program code which, when said program code is executed by the lighting control device (110-j) of a lighting unit (130-j) according to claim 1, causes the lighting control device (110-j) to carry out the method according to claim 12.

## Patentansprüche

1. Beleuchtungseinheit (130-j), umfassend eine Leuchteneinheit (120-j), eine Sensorbaugruppe (140-j), umfassend eine oder mehrere Sensoreinrichtungen zum Beobachten jeweiliger Charakteristika in einem durch die Leuchteneinheit (120-j) ausgeleuchteten Raum und eine Beleuchtungssteuereinrichtung (110-j) zum Steuern der Lichtausgabe von der Leuchteneinheit (120-j), wobei die Leuchteneinheit (120-j) eine oder mehrere erste Lichtquellen (121-j) umfasst, die ausgelegt sind zum Liefern von Beleuchtung mit ersten Beleuchtungscharakteristika, und eine oder mehrere zweite Lichtquellen (122-j), die ausgelegt sind zum Bereitstellen einer Beleuchtung mit zweiten Beleuchtungscharakteristika, die von den ersten Beleuchtungscharakteristika in mindestens einem Aspekt verschieden sind, wobei eine der ersten und zweiten Beleuchtungscharakteristika eine indirekte Beleuchtung umfasst und die andere eine direkte Beleuchtung umfasst, und wobei die Sensorbaugruppe (140-j) mindestens einen Belegungssensor zum Beobachten der Belegung oder Nichtbelegung des Raums und/oder mindestens einen Lichtsensor zum Beobachten eines Umgebungslichtpegels in dem Raum umfasst, wobei die Beleuchtungssteuereinrichtung (110-j) umfasst:
ein Steuermittel zum Steuern einer Lichtausgabe von der Leuchteneinheit (120-j), wobei das Steuermittel mit einer Beleuchtungssteuerlogik vorprogrammiert ist, die eine erste Beleuchtungssteuerlogik zum Steuern einer Lichtausgabe von der einen oder den mehreren ersten Lichtquellen (121-j) und eine zweite Beleuchtungssteuerlogik zum Steuern einer Lichtausgabe von der einen oder den mehreren zweiten Lichtquellen (122-j) umfasst,
**dadurch gekennzeichnet, dass** das Steuermittel ausgelegt ist zum Steuern der Lichtausgabe über das Umsetzen einer vorprogrammierten Beleuchtungssteuerlogik, die Paare einer lokalen Auslösebedingung und eine entsprechende Beleuchtungssteuerhandlung zur Ausführung als Reaktion auf ein Auftreten der lokalen Auslösebedingung definiert, wobei die vorprogrammierte Beleuchtungssteuerlogik eine Weise des Steuerns einer Lichtausgabe von der Leuchteneinheit (120-j) definiert, das Steuermittel ausgelegt ist zum Erhalten von Informationen, die die ersten und zweiten Beleuchtungscharakteristika angeben,
ein Kommunikationsmittel zur Drahtloskommunikation mit anderen Beleuchtungssteuereinrichtungen (110), die dazu dienen, andere Leuchteneinheiten (120) zu steuern, wobei das Kommunikationsmittel ausgelegt ist zum Empfangen von Statusangaben von den anderen Beleuchtungssteuereinrichtungen (110), und
ein Anpassungsmittel zum Verstellen der vorprogrammierten Beleuchtungssteuerlogik gemäß den durch das Kommunikationsmittel empfangenen Statusangaben, wobei das Anpassungsmittel ausgelegt ist zum Umprogrammieren mindestens eines Teils der voneinander verschiedenen ersten Beleuchtungssteuerlogik und der zweiten Beleuchtungssteuerlogik in Abhängigkeit von den ersten und zweiten Beleuchtungscharakteristika auf Basis der empfangenen Statusangaben, wobei das Umprogrammieren einen der folgenden Schritte umfasst:
- Definieren einer oder mehrerer weiterer Auslösebedingungen für eine oder mehrere vordefinierte Beleuchtungssteuerhandlungen,
- Verstellen eines oder mehrerer Parameter, die eine oder mehrere der Auslösebedingungen betreffen,
- Deaktivieren einer oder mehrerer der Auslösebedingungen und/oder einer oder mehrerer der Beleuchtungssteuerhandlungen.

2. Beleuchtungseinheit (130-j) nach Anspruch 1,
wobei das Anpassungsmittel ausgelegt ist zum Definieren einer ersten weiteren Auslösebedingung für eine in der ersten Beleuchtungssteuerlogik definierte vorprogrammierte Beleuchtungssteuerhandlung und zum Definieren einer zweiten weiteren Auslösebedingung für eine in der zweiten Beleuchtungssteuerlogik definierte vorprogrammierte Beleuchtungssteuerhandlung, wobei die erste weitere Auslösebedingung von der zweiten weiteren Auslösebedingung verschieden ist.

3. Beleuchtungseinheit (130-j) nach Anspruch 1 oder 2,
wobei die erste Beleuchtungssteuerlogik das Einstellen einer Lichtausgabe von der einen oder den mehreren ersten Lichtquellen (121-j) auf eine erste Ziellichtintensität als Reaktion auf eine lokale Auslösebedingung definiert und die zweite Beleuchtungssteuerlogik das Einstellen einer Lichtausgabe von der einen oder den mehreren zweiten Lichtquellen (122-j) auf eine zweite Ziellichtintensität als Reaktion auf die lokale Auslösebedingung definiert, und
wobei das Anpassungsmittel ausgelegt ist zum:
Bestimmen einer ersten und zweiten Beziehungsstärke betreffend eine bestimmte andere Beleuchtungssteuereinrichtung (110-k), wobei die erste und zweite Beziehungsstärke jeweilige Angaben von Regularität umfassen, mit der die lokale Auslösebedingung nach dem ersten Empfangen einer gegebenen Statusangabe von der bestimmten anderen Beleuchtungssteuereinrichtung (110-k) beobachtet worden ist, wobei die erste Beziehungsstärke von der zweiten Beziehungsstärke verschieden bestimmt wird,
Umprogrammieren der ersten Beleuchtungssteuerlogik in Abhängigkeit von der ersten Beziehungsstärke, zum weiteren Definieren des Einschaltens der Lichtausgabe von der einen oder den mehreren ersten Lichtquellen (121-j) als Antwort auf das Empfangen der gegebenen Statusangabe von der bestimmten anderen Beleuchtungssteuereinrichtung (110-k), und
Umprogrammieren der zweiten Beleuchtungssteuerlogik in Abhängigkeit von der zweiten Beziehungsstärke zum weiteren Definieren des Einschaltens der Lichtausgabe von der einen oder den mehreren zweiten Lichtquellen (122-j) als Reaktion auf das Empfangen der gegebenen Statusangabe von der bestimmten anderen Beleuchtungssteuereinrichtung (110-k).

4. Beleuchtungseinheit (130-j) nach Anspruch 3, wobei die lokale Auslösebedingung umfasst, dass ein Belegungssensorsignal eine Belegung angibt, und wobei die gegebene Statusangabe eine der folgenden umfasst:
eine Angabe, dass die bestimmte andere Beleuchtungssteuereinrichtung (110-k) die eine oder die mehreren ersten Lichtquellen (121-j) mit einer jeweiligen Ziellichtintensität eingeschaltet hat,
eine Angabe, dass die bestimmte andere Beleuchtungssteuereinrichtung (110-k) die eine oder mehreren zweiten Lichtquellen (122-j) mit einer jeweiligen Ziellichtintensität eingeschaltet hat.

5. Beleuchtungseinheit (130-j) nach Anspruch 1 oder 2,
wobei das Anpassungsmittel ausgelegt ist zum Verstellen der Beleuchtungssteuerlogik gemäß eines wiederholt auftretenden Musters, wobei auf eine gegebene Sequenz aus einer oder mehreren Statusangaben eine lokale Auslösebedingung folgt, wobei das Anpassungsmittel ausgelegt ist zum Umprogrammieren mindestens eines Teils der Beleuchtungssteuerlogik als Antwort auf ein Identifizieren des wiederholt auftretenden Musters und wobei ein zum Identifizieren eines Musters als wiederholt auftretend angewendetes Kriterium für Beleuchtungssteuerhandlungen der ersten Beleuchtungssteuerlogik von dem für Beleuchtungssteuerhandlungen der zweiten Beleuchtungssteuerlogik angewendeten verschieden ist.

6. Beleuchtungseinheit (130-j) nach Anspruch 1 oder 2,
wobei die erste Beleuchtungssteuerlogik das Einstellen einer Lichtausgabe von der einen oder den mehreren ersten Lichtquellen (121-j) auf eine erste Ziellichtintensität als Reaktion auf eine lokale Auslösebedingung definiert und die zweite Beleuchtungssteuerlogik das Einstellen einer Lichtausgabe von der einen oder den mehreren zweiten Lichtquellen (122-j) auf eine zweite Ziellichtintensität als Reaktion auf die lokale Auslösebedingung definiert, und wobei das Anpassungsmittel ausgelegt ist zum:
Identifizieren eines ersten wiederholt auftretenden Musters gemäß einem oder mehreren ersten Kriterien, wobei auf eine erste Sequenz aus einer oder mehreren Statusangaben die lokale Auslösebedingung folgt, und Identifizieren eines zweiten wiederholt auftretenden Musters gemäß einem oder mehreren zweiten Kriterien, wobei auf eine zweite Sequenz aus einer oder mehreren Statusangaben die lokale Auslösebedingung folgt, wobei das eine oder die mehreren ersten Kriterien von dem einen oder den mehreren zweiten Kriterien verschieden sind,
Umprogrammieren der ersten Beleuchtungssteuerlogik zum weiteren Definieren des Einschaltens der Lichtausgabe von der einen oder den mehreren ersten Lichtquellen (121-j) als Reaktion auf das Empfangen der ersten Sequenz aus einer oder mehreren Statusangaben, und
Umprogrammieren der zweiten Beleuchtungssteuerlogik zum weiteren Definieren des Einschaltens der Lichtausgabe von der einen oder den mehreren zweiten Lichtquellen (122-j) als Antwort auf das Empfangen der zweiten Sequenz aus einer oder mehreren Statusangaben.

7. Beleuchtungseinheit (130-j) nach Anspruch 6, wobei eines der folgenden gilt:
das eine oder die mehreren ersten Kriterien definieren eine erste Teilmenge von Statusangaben zur Berücksichtigung bei der Identifikation des ersten wiederholt auftretenden Musters, und das eine oder die mehreren zweiten Kriterien definieren eine zweite Teilmenge von Statusangaben zur Berücksichtigung bei der Identifikation des zweiten wiederholt auftretenden Musters, wobei die zweite Teilmenge von der ersten Teilmenge verschieden ist,
das eine oder die mehreren ersten Kriterien eine erste größte Anzahl von Statusangaben, die in der ersten Sequenz enthalten sind, zur Berücksichtigung bei der Identifikation des ersten wiederholt auftretenden Musters definieren, und das eine oder die mehreren zweiten Kriterien eine zweite größte Anzahl von Statusangaben, die in der zweiten Sequenz enthalten sind, zur Berücksichtigung bei der Identifikation des zweiten wiederholt auftretenden Musters definieren, wobei die zweite größte Anzahl von der ersten größten Anzahl verschieden ist,
das eine oder die mehreren ersten Kriterien eine erste größte Anzahl von anderen Beleuchtungssteuereinrichtungen (110) zur Berücksichtigung bei der Identifikation des ersten wiederholt auftretenden Musters definieren und das eine oder die mehreren zweiten Kriterien eine zweite größte Anzahl von anderen Beleuchtungssteuereinrichtungen (110) zur Berücksichtigung bei der Identifikation des zweiten wiederholt auftretenden Musters definieren, wobei die zweite größte Anzahl von der ersten größten Anzahl verschieden ist.

8. Beleuchtungseinheit (130-j) nach Anspruch 3 oder 4, wobei das Anpassungsmittel ausgelegt ist zum:
Empfangen einer Sichtbarkeitsangabe von der bestimmten anderen Beleuchtungssteuereinrichtung (110-k), die eine Nichtsichtbarkeit einer direkten Beleuchtung von der Leuchteneinheit (120-j) an einem Ort der bestimmten anderen Beleuchtungssteuereinrichtung (110-k) angibt, und
Deaktivieren der auf die erste Beleuchtungssteuerlogik angewendeten Umprogrammierung als Reaktion auf die Sichtbarkeitsangabe zum Einschalten der Lichtausgabe von der einen oder den mehreren ersten Lichtquellen (121-j) als Reaktion auf das Empfangen der gegebenen Statusangabe von der jeweiligen anderen Beleuchtungssteuereinrichtung (110-k).

9. Beleuchtungseinheit (130-j) nach Anspruch 1, wobei das Anpassungsmittel ausgelegt ist zum:
Empfangen von mehreren Lichtpegelangaben bezüglich einer Lichtausgabe von der Beleuchtungseinheit (130-j) von einer bestimmten anderen Beleuchtungssteuereinrichtung (110-k), die angibt, dass ein Lichtpegel einen vordefinierten Lichtpegelschwellwert überschreitet,
Umprogrammieren der Beleuchtungssteuerlogik auf eine oder mehrere der folgenden Weisen:
Umprogrammieren der ersten Beleuchtungssteuerlogik zum Definieren einer Einstellung der Lichtausgabe von der einen oder den mehreren ersten Lichtquellen (121-j) auf eine erste Ziellichtintensität als Reaktion auf das Empfangen einer Angabe, dass die bestimmte andere Beleuchtungssteuereinrichtung (110-k) die eine oder die mehreren ersten Lichtquellen (121-k) eingeschaltet hat;
Umprogrammieren der ersten Beleuchtungssteuerlogik zum Definieren einer Einstellung der Lichtausgabe von der einen oder den mehreren ersten Lichtquellen (121-j) auf eine erste Bereitschaftslichtintensität als Reaktion auf das Empfangen einer Angabe, dass die bestimmte andere Beleuchtungssteuereinrichtung (110-k) die eine oder die mehreren ersten Lichtquellen (121-k) auf eine jeweilige Bereitschaftslichtintensität eingestellt hat;
Umprogrammieren der zweiten Beleuchtungssteuerlogik zum Definieren einer Einstellung der Lichtausgabe von der einen oder den mehreren zweiten Lichtquellen (122-j) auf eine zweite Ziellichtintensität als Reaktion auf das Empfangen einer Angabe, dass die bestimmte andere Beleuchtungssteuereinrichtung (110-k) die eine oder die mehreren zweiten Lichtquellen (122-k) eingeschaltet hat,
Umprogrammieren der zweiten Beleuchtungssteuerlogik zum Definieren einer Einstellung der Lichtausgabe von der einen oder den mehreren zweiten Lichtquellen (122-j) auf eine zweite Bereitschaftslichtintensität als Reaktion auf das Empfangen einer Angabe, dass die bestimmte andere Beleuchtungssteuereinrichtung (110-k) die eine oder die mehreren zweiten Lichtquellen (122-k) auf eine jeweilige Bereitschaftslichtintensität eingestellt hat.

10. Beleuchtungseinheit (130-j) nach einem der Ansprüche 1 bis 9, wo das Steuermittel ausgelegt ist zum Ausführen einer Detektionsprozedur vom Beleuchtungstyp, umfassend:
Einschalten (302) der einen oder der mehreren ersten Lichtquellen (121-j);
Messen (304) eines ersten Lichtpegels, der einen Lichtausgabepegel der einen oder mehreren ersten Lichtquellen (121-j) beschreibt;
Einschalten (306) der einen oder mehreren zweiten Lichtquellen (122-j);
Messen (308) eines zweiten Lichtpegels, der einen Lichtausgabepegel der einen oder mehreren zweiten Lichtquellen (122-j) beschreibt; und
Angeben entweder der einen oder mehreren Lichtquellen (121-j) oder der einen oder mehreren zweiten Lichtquellen (122-j) auf Basis einer Differenz zwischen dem ersten und zweiten Lichtpegel als diejenigen, die für die direkte Beleuchtung ausgelegt sind, und Angeben der anderen der einen oder mehreren Lichtquellen (121-j) oder der einen oder den mehreren zweiten Lichtquellen (122-j) als diejenigen, die für die indirekte Beleuchtung ausgelegt sind.

11. Beleuchtungseinheit (130-j) nach einem der Ansprüche 1 bis 10, wobei:
die erste Beleuchtungssteuerlogik das Schalten der Lichtausgabe von der einen oder den mehreren ersten Lichtquellen (121-j) auf eine erste Bereitschaftslichtintensität als Reaktion auf eine erste Periode der Nichtbelegung definiert,
die zweite Beleuchtungssteuerlogik das Schalten der Lichtausgabe von der einen oder den mehreren zweiten Lichtquellen (122-j) auf eine zweite Bereitschaftslichtintensität als Reaktion auf eine zweite Periode der Nichtbelegung definiert,
das Anpassungsmittel ausgelegt ist zum Einstellen der ersten Periode und der zweiten Periode auf jeweils verschiedene Werte in Abhängigkeit von der ersten und zweiten Beleuchtungscharakteristik.

12. Verfahren (200) zum Steuern einer Lichtausgabe von einer Leuchteneinheit (120-j) auf Basis von Sensordaten, erhalten von einer Sensorbaugruppe (140-j), die eine oder mehrere Sensoreinrichtungen umfasst, zum Beobachten jeweiliger Charakteristika in einem durch die Leuchteneinheit (120-j) ausgeleuchteten Raum, wobei die Leuchteneinheit (120-j) eine oder mehrere erste Lichtquellen (121-j) umfasst, die ausgelegt sind zum Liefern von Beleuchtung mit ersten Beleuchtungscharakteristika, und eine oder mehrere zweite Lichtquellen (122-j), die ausgelegt sind zum Bereitstellen einer Beleuchtung mit zweiten Beleuchtungscharakteristika, die von den ersten Beleuchtungscharakteristika in mindestens einem Aspekt verschieden sind, wobei eine der ersten und zweiten Beleuchtungscharakteristika eine indirekte Beleuchtung umfasst und die andere eine direkte Beleuchtung umfasst, und wobei die Sensorbaugruppe (140-j) mindestens einen Belegungssensor zum Beobachten der Belegung oder Nichtbelegung des Raums und/oder mindestens einen Lichtsensor zum Beobachten eines Umgebungslichtpegels in dem Raum umfasst, wobei das Verfahren (200) umfasst:
Betreiben (202) der Leuchteneinheit (120-j) auf Basis einer vorprogrammierten Beleuchtungssteuerlogik, die eine erste Beleuchtungssteuerlogik zum Steuern einer Lichtausgabe von der einen oder den mehreren ersten Lichtquellen (121-j) und eine zweite Beleuchtungssteuerlogik zum Steuern einer Lichtausgabe von der einen oder den mehreren zweiten Lichtquellen (122-j) umfasst,
**dadurch gekennzeichnet, dass** die vorprogrammierte Beleuchtungssteuerlogik Paare einer lokalen Auslösebedingung und einer entsprechenden Beleuchtungssteuerhandlung zur Ausführung als Reaktion auf ein Auftreten der lokalen Auslösebedingung definiert, wobei die vorprogrammierte Beleuchtungssteuerlogik eine Weise des Steuerns einer Lichtausgabe von der Leuchteneinheit (120-j) definiert,
Erhalten (204) von Informationen, die die ersten und zweiten Beleuchtungscharakteristika angeben,
Empfangen (206) von Statusangaben von anderen Beleuchtungssteuereinrichtungen (110) und
Verstellen (208) der vorprogrammierten Beleuchtungssteuerlogik gemäß den empfangenen Statusangaben, wobei das Verstellen das Umprogrammieren mindestens eines Teils der voneinander verschiedenen ersten Beleuchtungssteuerlogik und der zweiten Beleuchtungssteuerlogik in Abhängigkeit von den ersten und zweiten Beleuchtungscharakteristika auf Basis der empfangenen Statusangaben umfasst, wobei das Umprogrammieren eines der folgenden umfasst:
- Definieren einer oder mehrerer weiterer Auslösebedingungen für eine oder mehrere vordefinierte Beleuchtungssteuerhandlungen,
- Verstellen eines oder mehrerer Parameter, die eine oder mehrere der Auslösebedingungen betreffen,
- Deaktivieren einer oder mehrerer der Auslösebedingungen und/oder einer oder mehrerer der Beleuchtungssteuerhandlungen.

13. Computerprogramm (317) zum Steuern einer Lichtausgabe von einer Leuchteneinheit (120-j) auf Basis von Sensordaten, von einer Sensorbaugruppe (140-j) erhalten, umfassend eine oder mehrere Sensoreinrichtungen zum Beobachten jeweiliger Charakteristika in einem durch die Leuchteneinheit (120-j) ausgeleuchteten Raum, wobei die Leuchteneinheit (120-j) eine oder mehrere erste Lichtquellen (121-j) umfasst, die ausgelegt sind zum Liefern einer Beleuchtung mit ersten Beleuchtungscharakteristika, und eine oder mehrere zweite Lichtquellen (122-j), die ausgelegt sind zum Liefern einer Beleuchtung mit zweiten Beleuchtungscharakteristika, die von den ersten Beleuchtungscharakteristika unter mindestens einem Aspekt verschieden sind, und wobei eine der ersten und zweiten Beleuchtungscharakteristika eine indirekte Beleuchtung umfasst und die andere eine direkte Beleuchtung umfasst und die Sensorbaugruppe (140-j) mindestens einen Belegungssensor zum Beobachten einer Belegung oder Nichtbelegung des Raums und/oder mindestens einen Lichtsensor zum Beobachten eines Umgebungslichtpegels in dem Raum umfasst, wobei das Computerprogramm (317) einen computerlesbaren Programmcode umfasst, der, wenn der Programmcode durch die Beleuchtungssteuereinrichtung (110-j) einer Beleuchtungseinheit (130-j) nach Anspruch 1 ausgeführt wird, bewirkt, dass die Beleuchtungssteuereinrichtung (110-j) das Verfahren nach Anspruch 12 ausführt.

## Revendications

1. Unité d'éclairage (130-j) comprenant une unité de luminaire (120-j), un ensemble de capteurs (140-j) comprenant un ou plusieurs dispositifs capteurs pour observer des caractéristiques respectives dans un espace éclairé par l'unité de luminaire (120-j) et un dispositif de commande de l'éclairage (110-j) pour commander la lumière émise par l'unité de luminaire (120-j), l'unité de luminaire (120-j) comprenant une ou plusieurs premières sources de lumière (121-j) conçues pour fournir un éclairage avec les premières caractéristiques d'éclairage et une ou plusieurs deuxièmes sources de lumière (122-j) conçues pour fournir un éclairage avec les deuxièmes caractéristiques d'éclairage qui sont différentes des premières caractéristiques d'éclairage au moins vis-à-vis d'un aspect, et dans laquelle l'une des premières et deuxièmes caractéristiques d'éclairage comprend un éclairage indirect et l'autre un éclairage direct, et dans laquelle l'ensemble de capteurs (140-j) comprend au moins un capteur d'occupation pour observer l'occupation ou la non-occupation de l'espace et/ou au moins un capteur de lumière pour observer le niveau de la lumière ambiante dans l'espace, le dispositif de commande de l'éclairage (110-j) comprenant :
un moyen de commande pour contrôler la lumière émise par l'unité de luminaire (120-j), le moyen de commande étant préprogrammé avec une logique de commande de l'éclairage qui comprend une première logique de commande de l'éclairage pour contrôler la lumière émise par une ou plusieurs premières sources de lumière (121-j) et une deuxième logique de commande de l'éclairage pour contrôler la lumière émise par une ou plusieurs deuxièmes sources de lumière (122-j),
caractérisé en ce le moyen de commande est conçu pour commander la lumière émise en mettant en oeuvre une logique de commande de l'éclairage préprogrammée qui définit des paires d'une condition de déclenchement locale et d'une action de commande de l'éclairage correspondante à exécuter en réponse à l'occurrence de la condition de déclenchement locale, la logique de commande de l'éclairage préprogrammée définissant une manière de commander la lumière émise par l'unité de luminaire (120-j), le moyen de commande étant conçu pour obtenir des informations qui indiquent les premières et deuxièmes caractéristiques d'éclairage,
un moyen de communication pour la communication sans fil avec d'autres dispositifs de commande de l'éclairage (110) qui servent à contrôler d'autres unités de luminaire (120), le moyen de communication étant configuré pour recevoir des indications d'état des autres dispositifs de commande de l'éclairage (110), et
un moyen d'adaptation pour ajuster la logique de commande de l'éclairage préprogrammée en fonction des indications d'état reçues par ledit moyen de communication, le moyen d'adaptation étant agencé pour reprogrammer au moins une partie de la première logique de commande de l'éclairage et de la deuxième logique de commande de l'éclairage différemment l'une de l'autre en fonction des premières et deuxièmes caractéristiques d'éclairage basées sur les indications d'état reçues, ladite reprogrammation comprenant l'une des étapes suivantes :
- définir une ou plusieurs conditions de déclenchement supplémentaires pour une ou plusieurs actions de commande de l'éclairage prédéfinies,
- ajuster un ou plusieurs paramètres relatifs à une ou plusieurs des conditions de déclenchement,
- désactiver une ou plusieurs des conditions de déclenchement et/ou une ou plusieurs des actions de commande de l'éclairage.

2. Unité d'éclairage (130-j) selon la revendication 1, dans laquelle le moyen d'adaptation est conçu pour définir une première condition de déclenchement supplémentaire pour une action de commande de l'éclairage préprogrammée définie dans la première logique de commande de l'éclairage et pour définir une deuxième condition de déclenchement supplémentaire pour une action de commande de l'éclairage préprogrammée définie dans la deuxième logique de commande de l'éclairage, la première condition de déclenchement supplémentaire étant différente de la deuxième condition de déclenchement supplémentaire.

3. Unité d'éclairage (130-j) selon la revendication 1 ou la revendication 2,
dans laquelle la première logique de commande de l'éclairage définit un réglage de la lumière émise par les une ou plusieurs premières sources de lumière (121-j) à une première intensité lumineuse cible en réponse à une condition de déclenchement locale et la deuxième logique de commande de l'éclairage définit le réglage de la lumière émise par les une ou plusieurs deuxièmes sources de lumière (122-j) à une deuxième intensité lumineuse cible en réponse à ladite condition de déclenchement locale, et
dans laquelle le moyen d'adaptation est conçu pour :
déterminer les première et deuxième intensités de relation pertinentes pour un autre dispositif de commande de l'éclairage particulier (110-k), lesdites première et deuxième intensités de relation comprenant des indications respectives de la régularité à laquelle ladite condition de déclenchement locale a été observée après avoir d'abord reçu une indication d'état donnée de la part dudit autre dispositif de commande de l'éclairage particulier (110-k), où la première intensité de relation est déterminée différemment de la deuxième intensité de relation,
reprogrammer, en fonction de la première intensité de relation, la première logique de commande de l'éclairage pour définir en outre l'allumage de la lumière émise par les une ou plusieurs premières sources de lumière (121-j) en réponse à la réception de ladite indication d'état donnée de la part dudit autre dispositif de commande de l'éclairage (110-k), et
reprogrammer, en fonction de la deuxième intensité de relation, la deuxième logique de commande de l'éclairage pour définir en outre l'allumage de la lumière émise par les une ou plusieurs deuxièmes sources de lumière (122-j) en réponse à la réception de ladite indication d'état donnée de la part dudit autre dispositif de commande de l'éclairage (110-k).

4. Unité d'éclairage (130-j) selon la revendication 3, dans laquelle ladite condition de déclenchement locale comprend un signal de capteur d'occupation indiquant l'occupation, et dans laquelle ladite indication d'état donnée comprend l'une des indications suivantes :
une indication que ledit autre dispositif de commande de l'éclairage particulier (110-k) a allumé les une ou plusieurs premières sources de lumière (121-j) à une intensité lumineuse cible respective,
une indication que ledit autre dispositif de commande de l'éclairage particulier (110-k) a allumé les une ou plusieurs deuxièmes sources de lumière (122-j) à une intensité lumineuse cible respective.

5. Unité d'éclairage (130-j) selon la revendication 1 ou la revendication 2,
dans laquelle le moyen d'adaptation est conçu pour ajuster la logique de commande de l'éclairage en fonction d'un schéma se produisant de manière répétée lorsqu'une séquence donnée d'une ou plusieurs indications d'état est suivie d'une condition de déclenchement locale donnée, dans laquelle le moyen d'adaptation est conçu pour reprogrammer au moins une partie de la logique de commande de l'éclairage en réponse à l'identification dudit schéma se produisant de manière répétée, et dans laquelle un critère appliqué pour identifier un schéma comme étant un schéma se produisant de manière répétée est différent pour les actions de commande de l'éclairage de la première logique de commande de l'éclairage de celui appliqué pour les actions de commande de l'éclairage de la deuxième logique de commande de l'éclairage.

6. Unité d'éclairage (130-j) selon la revendication 1 ou la revendication 2,
dans laquelle la première logique de commande de l'éclairage définit un réglage de la lumière émise par les une ou plusieurs premières sources de lumière (121-j) à une première intensité lumineuse cible en réponse à une condition de déclenchement locale, et la deuxième logique de commande de l'éclairage définit un réglage de la lumière émise par les une ou plusieurs deuxièmes sources de lumière (122-j) à une deuxième intensité lumineuse cible en réponse à ladite condition de déclenchement locale, et
dans laquelle le moyen d'adaptation est conçu pour :
identifier, selon un ou plusieurs premiers critères, un premier schéma se produisant de manière répétée dans lequel une première séquence d'une ou plusieurs indications d'état est suivie de ladite condition de déclenchement locale, et identifier, selon un ou plusieurs deuxièmes critères, un deuxième schéma se produisant de manière répétée dans lequel une deuxième séquence d'une ou plusieurs indications d'état est suivie de ladite condition de déclenchement locale, les un ou plusieurs premiers critères étant différents des un ou plusieurs deuxièmes critères,
reprogrammer la première logique de commande de l'éclairage pour définir en outre l'allumage de la lumière émise par les une ou plusieurs premières sources de lumière (121-j) en réponse à la réception de ladite première séquence d'une ou plusieurs indications d'état, et
reprogrammer la deuxième logique de commande de l'éclairage pour définir en outre l'allumage de la lumière émise par les une ou plusieurs deuxièmes sources de lumière (122-j) en réponse à la réception de ladite deuxième séquence d'une ou plusieurs indications d'état.

7. Unité d'éclairage (130-j) selon la revendication 6, dans laquelle l'un des points suivants s'applique :
les un ou plusieurs premiers critères définissent un premier sous-ensemble d'indications d'état à prendre en compte pour l'identification du premier schéma se produisant de manière répétée, et les un ou plusieurs deuxièmes critères définissent un deuxième sous-ensemble d'indications d'état à prendre en compte pour l'identification du deuxième schéma se produisant de manière répétée, ce deuxième sous-ensemble étant différent du premier sous-ensemble,
les un ou plusieurs premiers critères définissent un premier nombre maximal d'indications d'état incluses dans la première séquence à prendre en considération pour l'identification du premier schéma se produisant de manière répétée, et les un ou plusieurs deuxièmes critères définissent un deuxième nombre maximal d'indications d'état incluses dans la deuxième séquence à prendre en considération pour l'identification du deuxième se produisant de manière répétée, ce deuxième nombre maximal étant différent du premier nombre maximal,
les un ou plusieurs premiers critères définissent un premier nombre maximal d'autres dispositifs de commande de l'éclairage (110) à prendre en considération pour l'identification du premier schéma se produisant de manière répétée, et les un ou plusieurs deuxièmes critères définissent un deuxième nombre maximal d'autres dispositifs de commande de l'éclairage (110) à prendre en considération pour l'identification du deuxième schéma se produisant de manière répétée, ce deuxième nombre maximal étant différent du premier nombre maximal.

8. Unité d'éclairage (130-j) selon la revendication 3 ou la revendication 4, dans laquelle le moyen d'adaptation est conçu pour :
recevoir, en provenance dudit autre dispositif de commande de l'éclairage particulier (110-k), une indication de visibilité indiquant la non-visibilité de l'éclairage direct provenant de l'unité d'éclairage (120-j) à un emplacement dudit autre dispositif de commande de l'éclairage particulier (110-k), et
désactiver, en réponse à ladite indication de visibilité, la reprogrammation appliquée à la première logique de commande de l'éclairage pour allumer la lumière émise par les une ou plusieurs premières sources de lumière (121-j) en réponse à la réception de ladite indication d'état donnée à partir dudit autre dispositif de commande de l'éclairage particulier (110-k).

9. Unité d'éclairage (130-j) selon la revendication 1, dans laquelle le moyen d'adaptation est conçu pour :
recevoir une pluralité d'indications de niveau de lumière relatives à la lumière émise par l'unité d'éclairage (130-j) à partir d'un autre dispositif de commande de l'éclairage particulier (110-k) qui indique un niveau de lumière dépassant un seuil de niveau de lumière prédéfini,
reprogrammer la logique de commande de l'éclairage d'une ou de plusieurs des manières suivantes :
reprogrammer la première logique de commande de l'éclairage pour définir le réglage de la lumière émise par les une ou plusieurs premières sources de lumière (121-j) à une première intensité lumineuse cible en réponse à la réception d'une indication selon laquelle ledit autre dispositif de commande de l'éclairage particulier (110-k) a allumé les une ou plusieurs premières sources de lumière (121-k) ;
reprogrammer la première logique de commande de l'éclairage pour définir le réglage de la lumière émise par les une ou plusieurs premières sources de lumière (121-j) à une première intensité lumineuse de veille en réponse à la réception d'une indication selon laquelle ledit autre dispositif de commande de l'éclairage particulier (110-k) a réglé les une ou plusieurs premières sources de lumière (121-k) à une intensité lumineuse de veille respective ;
reprogrammer la deuxième logique de commande de l'éclairage pour définir le réglage de la lumière émise par les une ou plusieurs deuxièmes sources de lumière (122-j) à une deuxième intensité lumineuse cible en réponse à la réception d'une indication selon laquelle ledit autre dispositif de commande de l'éclairage particulier (110-k) a allumé les une ou plusieurs deuxièmes sources de lumière (122-k),
reprogrammer la deuxième logique de commande de l'éclairage pour définir le réglage de la lumière émise par les une ou plusieurs deuxièmes sources de lumière (122-j) à une deuxième intensité lumineuse de veille en réponse à la réception d'une indication selon laquelle ledit autre dispositif de commande de l'éclairage particulier (110-k) a réglé les une ou plusieurs deuxièmes sources de lumière (122-k) à une intensité lumineuse de veille respective.

10. Unité d'éclairage (130-j) selon l'une quelconque des revendications 1 à 9, dans laquelle le moyen de commande est conçu pour exécuter une procédure de détection de type d'éclairage comprenant les étapes suivantes :
allumer (302) les une ou plusieurs premières sources de lumière (121-j) ;
mesurer (304) un premier niveau de lumière qui est descriptif du niveau de la lumière émise par les une ou plusieurs premières sources de lumière (121-j) ;
allumer (306) les une ou plusieurs deuxièmes sources de lumière (122-j) ;
mesurer (308) un deuxième niveau de lumière qui est descriptif du niveau de la lumière émise par les une ou plusieurs deuxièmes sources de lumière (122-j) ; et indiquer, sur la base d'une différence entre le premier niveau de lumière et le deuxième niveau de lumière, soit les une ou plusieurs premières sources de lumière (121-j), soit les une ou plusieurs deuxièmes sources de lumière (122-j) comme étant celles qui sont disposées pour l'éclairage direct, et indiquer les autres sources de lumière parmi les premières sources de lumière (121-j) et les deuxièmes sources de lumière (122-j) comme étant celles qui sont disposées pour l'éclairage indirect.

11. Unité d'éclairage (130-j) selon l'une quelconque des revendications 1 à 10, dans laquelle :
la première logique de commande de l'éclairage définit l'allumage de la lumière émise par les une ou plusieurs premières sources de lumière (121-j) à une première intensité lumineuse de veille en réponse à une première période d'inoccupation,
la deuxième logique de commande de l'éclairage définit l'allumage de la lumière émise par les une ou plusieurs deuxièmes sources de lumière (122-j) à une deuxième intensité lumineuse de veille en réponse à une deuxième période d'inoccupation,
le moyen d'adaptation est conçu pour régler la première période et la deuxième période à des valeurs respectives différentes en fonction des premières et des deuxièmes caractéristiques d'éclairage.

12. Procédé (200) de commande de la lumière émise par une unité de luminaire (120-j) sur la base des données de capteur obtenues d'un ensemble de capteurs (140-j) comprenant un ou plusieurs dispositifs capteurs pour observer des caractéristiques respectives dans un espace éclairé par l'unité de luminaire (120-j), l'unité de luminaire (120-j) comprenant une ou plusieurs premières sources de lumière (121-j) conçues pour fournir un éclairage à des premières caractéristiques d'éclairage et une ou plusieurs deuxièmes sources de lumière (122-j) conçues pour fournir un éclairage à des deuxièmes caractéristiques d'éclairage qui sont différentes des premières caractéristiques d'éclairage au moins vis-à-vis d'un aspect, et dans lequel l'une des premières et deuxièmes caractéristiques d'éclairage comprend un éclairage indirect et l'autre comprend un éclairage direct, et l'ensemble de capteurs (140-j) comprenant au moins un capteur d'occupation pour observer l'occupation ou la non-occupation de l'espace et/ou au moins un capteur de lumière pour observer le niveau de lumière ambiante dans l'espace, le procédé (200) comprenant les étapes suivantes :
faire fonctionner (202) l'unité de luminaire (120-j) sur la base d'une logique de commande de l'éclairage préprogrammée qui comprend une première logique de commande de l'éclairage pour contrôler la lumière émise par les une ou plusieurs premières sources de lumière (121-j) et une deuxième logique de commande de l'éclairage pour contrôler la lumière émise par les une ou plusieurs deuxièmes sources de lumière (122-j),
**caractérisé en ce que** la logique de commande de l'éclairage préprogrammée définit des paires d'une condition de déclenchement locale et d'une action de commande de l'éclairage correspondante à exécuter en réponse à l'occurrence de la condition de déclenchement locale, la logique de commande de l'éclairage préprogrammée définissant une manière de commander la lumière émise par l'unité de luminaire (120-j),
obtenir (204) des informations indiquant les premières et deuxièmes caractéristiques d'éclairage,
recevoir (206) des indications d'état provenant d'autres dispositifs de commande de l'éclairage (110), et
ajuster (208) la logique de commande de l'éclairage préprogrammée en fonction des indications d'état reçues, ledit ajustement comprenant de reprogrammer au moins une partie de la première logique de commande de l'éclairage et de la deuxième logique de commande de l'éclairage différemment l'une de l'autre en fonction des premières et deuxièmes caractéristiques d'éclairage sur la base des indications d'état reçues, ladite reprogrammation comprenant l'une des étapes suivantes :
- définir une ou plusieurs conditions de déclenchement supplémentaires pour une ou plusieurs actions de commande de l'éclairage prédéfinies,
- ajuster un ou plusieurs paramètres relatifs à une ou plusieurs des conditions de déclenchement,
- désactiver une ou plusieurs des conditions de déclenchement et/ou une ou plusieurs des actions de commande de l'éclairage.

13. Programme d'ordinateur (317) pour contrôler la lumière émise par une unité de luminaire (120-j) sur la base de données de capteur obtenues à partir d'un ensemble de capteurs (140-j) comprenant un ou plusieurs dispositifs capteurs pour observer les caractéristiques respectives dans un espace éclairé par l'unité de luminaire (120-j), l'unité de luminaire (120-j) comprenant une ou plusieurs premières sources de lumière (121-j) disposées pour fournir un éclairage à des premières caractéristiques d'éclairage et une ou plusieurs deuxièmes sources de lumière (122-j) disposées pour fournir un éclairage à des deuxièmes caractéristiques d'éclairage qui sont différentes des premières caractéristiques d'éclairage au moins vis-à-vis d'un aspect, et dans lequel l'une des premières et deuxièmes caractéristiques d'éclairage comprend un éclairage indirect et l'autre un éclairage direct, et dans lequel l'ensemble de capteurs (140-j) comprend au moins un capteur d'occupation pour observer l'occupation ou la non-occupation de l'espace et/ou au moins un capteur de lumière pour observer le niveau de la lumière ambiante dans l'espace, le programme d'ordinateur (317) comprenant un code de programme lisible par ordinateur qui, lorsque ledit code de programme est exécuté par le dispositif de commande de l'éclairage (110-j) d'une unité d'éclairage (130-j) selon la revendication 1, amène le dispositif de commande de l'éclairage (110-j) à mettre en oeuvre le procédé selon la revendication 12.
